# EUROPEAN PATENT SPECIFICATION

(11) **EP 3 606 665 B1**
(45) Date of publication and mention of the grant of the patent: **14.07.2021**
(21) Application number: 18717656.5
(22) Date of filing: 29.03.2018
(51) Int. Cl.: B01J 31/22, C08K 5/00, C09D 183/08, C08G 77/12, C08L 83/08, C07C 47/565, C08G 77/08, C08L 83/04, C08G 77/20

(54) **A METHOD OF SYNTHESISING A PT(II) COMPLEX; A PT(II) COMPLEX; USE OF SUCH A COMPLEX AS A PHOTOACTIVATABLE CATALYST IN A HYDROSILYLATION REACTION**
VERFAHREN ZUR SYNTHESE EINES PT(II)-KOMPLEXES; PT(II)-KOMPLEX; VERWENDUNG EINES SOLCHEN KOMPLEXES ALS FOTOAKTIVIERBARER KATALYSATOR IN EINER HYDROSILYLIERUNGSREAKTION
PROCÉDÉ DE SYNTHÈSE D'UN COMPLEXE PT (II); COMPLEXE PT (II); UTILISATION D'UN TEL COMPLEXE COMME CATALYSEUR PHOTOACTIVABLE DANS UNE RÉACTION D'HYDROSILYLATION

(30) Priority: 03.04.2017 GB 201705330
(43) Date of publication of application: 12.02.2020
(73) Proprietor: Johnson Matthey Public Limited Company, London EC4A 4AB (GB)
(72) Inventor: ASHFIELD, Laura, Reading Berkshire RG4 9NH (GB); KEEP, Ann, Royston Hertfordshire SH8 5HE (GB)
(74) Representative: Lorkin, Thomas James Anthony
(86) International application number: PCT/GB2018/050876
(87) International publication number: WO 2018/185472

(56) References cited:
- EP-A2- 0 398 701
- EL-BINDARY ASHRAF A ET AL: "Stereochemistry of new nitrogen-containing heterocyclic aldehydes. Novel quinoline complexes", GAZZETTA CHIMICA ITALIANA, SOCIETÀ CHIMICA ITALIANA, IT, vol. 127, no. 10, 1 January 1997 (1997-01-01), pages 597-600, XP009506034, ISSN: 0016-5603 -& ASHRAF A ; EL-SONBATI ET AL: "Stereochemistry of new nitrogen-containing heterocyclic aldehydes. Novel quinoline complexes", GAZZETTA CHIMICA ITALIANA, vol. 127, no. 10, 1 January 1997 (1997-01-01), pages 597-600, XP055483720,
- J.G. ROBLES-MARTINEZ ET AL: "Charge transfer in organic electron conductors with coordination complexes determined by infrared absorption spectroscopy", INORGANICA CHIMICA ACTA, vol. 179, no. 2, 1 January 1991 (1991-01-01), pages 149-150, XP055045354, ISSN: 0020-1693, DOI: 10.1016/S0020-1693(00)85869-7
- URMILA A. BHAGWAT ET AL: "Study of ligand isomeric complexes of N-furfurylsalicylaldimine", JOURNAL OF THE CHEMICAL SOCIETY. DALTON TRANSACTIONS, no. 12, 1 January 1980 (1980-01-01), page 2319, XP055483707, GB ISSN: 0300-9246, DOI: 10.1039/dt9800002319
- V A MUKHEDKAR ET AL: "Metal complexes of N-2-thenylsalicylaldimine", JOURNAL OF THE CHEMICAL SOCIETY DALTON TRANSACTIONS: INORGANIC CHEMISTRY, no. 10, 1 January 1982 (1982-01-01), pages 1899-1902, XP055483725, -& VASUDHA A. MUKHEDKAR ET AL: "Metal complexes of N-2-thenylsalicylaldimine", JOURNAL OF THE CHEMICAL SOCIETY. DALTON TRANSACTIONS, no. 10, 1 January 1982 (1982-01-01), page 1899, XP055484643, GB ISSN: 0300-9246, DOI: 10.1039/dt9820001899
- J G Robles-Martinez: "XRN = 16754762", Inorganica Chimica Acta, vol. 179, 1 January 1991 (1991-01-01), pages 149-150, XP055688552,
- A. Chakravorty ET AL: "Studies on Nickel(II) Complexes. VI. The Conformational Equilibria of Bis(o-hydroxynaphthaldimine) Complexes", INORGANIC CHEMISTRY, vol. 3, no. 7, 1 July 1964 (1964-07-01), pages 1010-1015, XP055741651, EASTON, US ISSN: 0020-1669, DOI: 10.1021/ic50017a021
- Melvin Calvin ET AL: "Stability of Chelate Compounds. IV. Effect of the Metal Ion 1", Journal of the American Chemical Society, vol. 70, no. 10, 1 October 1948 (1948-10-01), pages 3270-3273, XP055741660, US ISSN: 0002-7863, DOI: 10.1021/ja01190a020

## Description

### Technical field

The present invention relates generally to methods of synthesising a platinum (II) complex from a platinum (IV) starting material, platinum (II) complexes made according to such syntheses and uses of such platinum (II) complexes as catalysts in hydrosilylation reactions.

### Background art

Hydrosilylation is an industrially important addition reaction between a compound containing silicon-bonded hydrogen and a compound containing aliphatic unsaturation. The result of hydrosilylation is the addition of the Si-H bond across the unsaturated bond.

The reaction is often catalysed by a complex of a transition metal such as Co, Rh, Ni, Pd or Pt. These catalysts are usually activated, either by thermal energy or UV radiation.

One useful product of the hydrosilylation reaction is Pt-cured silicones, that is silicones which have been cured by a platinum catalysed hydrosilylation reaction. Silicones are commonly used in products such as sealants and oils, with Pt-cured silicones being generally used in two main areas, namely release liners and elastomers. Release liners are often used for label backing or in the food industry in baking. Elastomers have a variety of uses from medical wound healing to air bag coatings. Platinum cured silicones are typically used when the end product is in contact with food or is for a medical application. Platinum cured silicones are also used to make transparent tubing and other objects, because clarity cannot be obtained with alternative methods such as peroxide curing. This is due to the peroxide migrating to the surface over time causing a 'bloom' effect which reduces clarity. Platinum cured silicones may also be used when high detail is required, for example in prototype models. Platinum curing is much faster than other techniques such as peroxide or tin, which are no longer favoured in the industry and are generally being phased out.

Platinum complexes used as hydrosilylation curing catalysts may be photoactivatable. In this respect, the platinum complex is photoactivatable if it is capable of acting as or is transformed into an active catalyst upon irradiation with UV or visible electromagnetic radiation.

Photoactivatable platinum complexes may be used in the preparation of silicones such as elastomers, release liners, adhesives (US2010256300) the coating or encapsulation of electronic chips, dental impressions (EP0398701) or the preparation of LED lenses (EP2617791). Additive layer manufacturing (ALM) or "3D printing" may also be used to prepare cured silicone products. Generally, layers of uncured material including the Pt catalyst are printed and subjected to UV curing after the printing of each layer (WO 2016/044547 A1). This method can be used to prepare any silicone product, incuding products with a complex shape.

A number of platinum-based complexes for use in UV-activated hydrosilylation are known in the art. (MeCp)PtMe₃ is one available catalyst which has a high activity under UV-activation and a low activity without UV-activation (see EP 0146307 A2 and EP 2617791 A1). These properties of a hydrosilylation catalyst are desirable to ensure that the initiation of the reaction can be properly controlled. However, (MeCp)PtMe₃ is volatile, toxic, expensive and very difficult to produce (Z Xue, M J Strouse, D K Shuh, C B Knobler, H D Kaesz, R F Hicks, R S Williams, Journal of the American Chemical Society, 111, 8779 (1989)). It is classified as fatal if swallowed, fatal in contact with skin, very toxic to aquatic life, causes serious eye irritation, may cause an allergic skin reaction, causes skin irritation and may cause respiratory irritation on the ECHA (European Chemicals Agency) website. Its volatility means there is a high risk of adverse exposure during use.

Another known platinum complex for use in UV-activated hydrosilylation is Pt(acac)₂ (see US 2003/235383 A1 and EP 0398701 A2). This is used as a less expensive and less volatile alternative to (MeCp)PtMe₃ but is not as soluble in siloxane substrates, has lower activity when UV-activated and higher activity without exposure to UV light.

A number of Pt(II) complexes are described in: Gazzetta Chimica Italiana vol.127, no.10, 1997, pp 597-700; Inorganica Chimica Acta vol.179, no.2, 1991, pp 149-150; Journal of the Chemical Society. Dalton Transactions no.12, 1980, p2319; Journal of the Chemical Society Dalton Transactions: Inorganic Chemistry no. 10, 1982, pp 1899-2902.

The Pt(II) complex described in Inorganica Chimica Acta vol.179, no.2, 1991, pp 149-150 is said to be prepared according to the method of Inorganic Chemistry vol. 3, no. 7, 1964, pp 1010-1015, which describes the preparation of bis(o-hydroxynaphthaldimine) complexes.

Journal of the American Chemical Society vol. 70, no. 10, 1948, pp 3270-3273 describes the preparation of bis(5-salicaldehydesulfonate) complexes of Fe(II), Co(II), Ni(II), Cu(II) and Zn(II).

However, none of these references describe the Pt(II) complexes in a hydrosilylation reaction.

There is therefore a need for further platinum-based catalysts which find use as catalysts in photo-activated hydrosilylation reactions. It would be desirable for such catalysts to not only provide desirable catalytic properties (for example, a large increase in activity upon exposure to UV) but also improvements in other properties such as solubility in siloxane substrates, low volatility and low toxicity. It would also be desirable for such catalysts to be easy to prepare at low cost.

In addition, there is a need for improved synthetic methods for the preparation of these platinum-based catalysts which can provide good yields of product via a simple synthetic route.

Any sub-titles herein are included for convenience only, and are not to be construed as limiting the disclosure in any way.

The disclosure of all references cited herein, inasmuch as it may be used by those skilled in the art to carry out the invention, is hereby specifically incorporated herein by cross-reference.

### Summary of the invention

A first aspect of the invention is a method of synthesising a Pt(II) complex comprising:
(i) a first step of preparing a reaction mixture comprising a water-soluble hexachloroplatinate salt having a solubility in water at 25 °C of at least 1 g/100 ml, and a compound according to Formula I', or salt thereof, and allowing the water-soluble hexachloroplatinate salt and the compound according to Formula I' to react 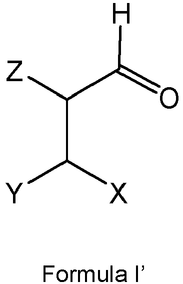 wherein
   X is selected from OH, SH and NH₂, and
   Y and Z, together with the two carbon atoms to which they are attached, form an unsubstituted benzene group or an unsubstituted naphthalene group;
   an intermediate step, after the first step but before the second step, of adding an alcoholic reducing agent and heating the reaction mixture to an elevated temperature T₂ of at least 50 °C; and
(ii) a second step of adding a further quantity of the compound according to Formula I', or a salt thereof, to the reaction mixture.

The first step of the method is the reaction of the water-soluble hexachloroplatinate salt with the compound according to Formula I' and the second step is the addition of a further quantity of the compound according to Formula I', to drive the reaction to high yield of Pt(II) complex product.

According to this synthetic method, a platinum (II) complex is prepared in very good yield and by a simple, efficient method with few reaction steps. By using the method according to the invention, excellent product yields of up to 50% are possible.

In some embodiments, the yield of product complex is at least 10%, for example at least 15%, at least 20%, at least 25%, at least 30%, at least 35% or at least 40%.

Furthermore, the resultant platinum (II) complex prepared by the method of the invention is useful as a photoactivatable hydrosilylation catalyst which has high activity when exposed to photochemical radiation, low activity when not exposed to such radiation, low toxicity, low volatility and good solubility in siloxane substrates. The activity of the catalyst is improved over known Pt catalysts such as Pt(acac)₂, so lower amounts of catalyst are required for similar curing results.

The methods used to prepare the Pt catalyst of the invention may also reduce the amount of unwanted side-products which may be produced in other methods.

A second aspect of the invention is a Pt(II) complex according to Formula la: 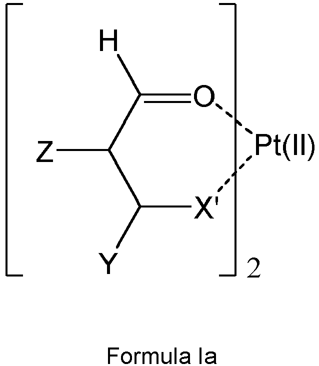 wherein
X' is selected from O, S and NH, and
Y and Z, together with the two carbon atoms to which they are attached, form an unsubstituted benzene group.

The inventors believe that they have successfully prepared such a complex for the first time.

The complex bis(salicylaldehyde) platinum (II) has been reported as a starting material for the preparation other Pt(II) complexes in J. Chem. Soc. Dalton Trans 1980, 2319-2322 and J. Chem. Soc. Dalton Trans. 1982, 1899-1902. However, neither reference provides an explanation of how the bis(salicylaldehyde) platinum (II) was prepared nor any characterisation data for the complex.

The platinum (II) complex according to the second aspect is useful as a photoactivatable hydrosilylation catalyst which has high activity when exposed to photochemical radiation, low activity when not exposed to such radiation, low toxicity, low volatility and good solubility in siloxane substrates. It may be easily prepared by simple synthetic methods in high yields as described herein. It therefore offers an improvement upon the known platinum-based complexes described above.

A third aspect of the invention is a method of performing a hydrosilylation reaction catalysed by a Pt(II) complex according to Formula I. Such a hydrosilylation reaction using the Pt(II) complex of the invention as a catalyst proceeds quickly, reducing the curing time and increasing line speed. This also allows for good control of final cured product shape. Furthermore, the method is safe due to the low volatility and low toxicity of the Pt(II) complex.

Also described in a fourth aspect of the invention is the use of a Pt(II) complex according to Formula I as a photoactivatable catalyst in a hydrosilylation reaction.

A fifth aspect of the invention is a curable composition comprising a Pt(II) complex according to Formula I.

A sixth aspect of the invention is a cured silicone product formed by curing a curable composition according to the fifth aspect.

Also described in a seventh aspect of the invention is a Pt(II) complex, made by a method of synthesis according to the first aspect.

### Detailed description of the invention

### Method of preparing a Pt(II) complex

A first aspect of the invention is a method of preparing a Pt(II) complex.

The method involves two distinct steps: a first step in which a reaction mixture, which comprises a water-soluble hexachloroplatinate salt and a compound according to Formula I' or a salt thereof, is prepared and allowed to react; and a second step in which a further quantity of the compound according to Formula I', or a salt thereof, is added to the reaction mixture.

Any salt of the hexachloroplatinate (PtCl₆²⁻) ion may be used in step (i), provided that it is water-soluble. In this context, the term "water-soluble" indicates a solubility in water at 25 °C of at least 1 g/100ml, for example at least 2 g/100ml, for example at least 5 g/100ml, for example at least 10 g/100ml, for example at least 20 g/100ml, for example at least 30 g/100ml.

In some embodiments, the water-soluble hexachloroplatinate salt is selected from chloroplatinic acid and sodium hexachloroplatinate. In some embodiments, the water-soluble hexachloroplatinate salt is chloroplatinic acid.

Chloroplatinic acid is the compound [H₃O]₂[PtCl₆], which is often specified using the shorthand "H₂PtCl₆".

The water-soluble hexachloroplatinate salt may be added to the reaction mixture in any suitable form. This may for example be the direct addition of the water-soluble hexachloroplatinate salt in solid form followed by dissolution into the reaction mixture, or the addition of a pre-prepared aqueous solution of the water-soluble hexachloroplatinate salt.

The defined water-soluble hexachloroplatinate salt must be used as the Pt-containing starting material. Other Pt-containing compounds do not provide satisfactory results. For example, the Pt(II)-containing compounds K₂PtCl₄ and K₂Pt(NO₃)₄ both hydrolyse to produce an ill-defined, insoluble Pt-hydroxy product. Other Pt(IV) compounds such as hexahydroxyplatinic acid and Pt(IV) nitrate do not result in the correct product. K₂PtCl₆ is also unsuitable due to its insolubility in water.

In some embodiments, the water-soluble hexachloroplatinate salt is added to the reaction mixture as an aqueous solution. In some embodiments, the aqueous solution contains at least 10 wt% water-soluble hexachloroplatinate salt, with respect to the total solution weight, for example at least 15 wt% or at least 20 wt%. In some embodiments, the aqueous solution contains up to 40 wt% water-soluble hexachloroplatinate salt, for example up to 35 wt% or up to 30 wt%.

The compound according to Formula I' can be added to the reaction mixture in neutral or salt form. If the compound is added as a salt, this may be a salt of a metal cation M. In some embodiments, M is an alkali metal cation, alkaline earth metal cation or transition metal cation. In some embodiments, M is an alkali metal cation. In some embodiments, M is Na⁺. It will be understood that any discussions herein relating the the compound according to Formula I' include such salts of that compound.

The physical form of the compound according to Formula I' will depend to some extent upon its chemical structure, but it may for example be a solid or an oil which may be added directly to the reaction mixture or added as a pre-prepared solution. In embodiments where the compound according to Formula I' is salicylaldehyde, this compound takes the form of an oily liquid at room temperature and may be added directly to the reaction mixture.

In some embodiments, the reaction mixture is prepared in the first step by the mixing of the water-soluble hexachloroplatinate salt and the compound according to Formula I' or salt thereof, optionally into a suitable amount of solvent, which may be carried out by any well-known mixing method.

Thus in some embodiments the reaction mixture comprises a solvent, which may be a single solvent or a suitable mixture of two or more solvents. The solvent or mixture of solvents may be selected from water (preferably deionised water), ethanol, propanol, isopropanol and THF.

In some embodiments, the solvent comprises water as a main component (i.e., more than 50 wt% of the solvent is water). In this way, the water-soluble hexachloroplatinate salt starting material may be easily dissolved. In some embodiments, alongside water as the main component the solvent also comprises a minor component, which may be any solvent or mixture of solvents which can dissolve the compound according to Formula I' and also has some miscibility with water. This is important as the compound according to Formula I' is generally insoluble or has low solubility in water alone. In some embodiments, this minor solvent component is selected from any C₁₋₆ aromatic, alicyclic or aliphatic organic compound. In this context, "C₁₋₆" denotes a compound containing 1 to 6 carbon atoms and optionally also including 1 or 2 heteroatoms selected from N, O and S.

In some embodiments, this minor solvent component comprises a C₁₋₆ alcohol compound, preferably a C₁₋₃ alcohol compound and/or a C₁₋₆ heterocyclic compound, preferably a C₁₋₅ heterocyclic compound. In some embodiments, this minor solvent component comprises or consists of one or more of ethanol, propanol, isopropanol and THF. In some embodiments, the minor solvent component is ethanol.

In some embodiments the solvent comprises a mixture of water, preferably deionised water, and ethanol. In some embodiments, the water and ethanol are mixed in a weight ratio of from 1:1 to 20:1, for example from 3:1 to 15:1, for example from 5:1 to 15:1, for example from 10:1 to 14:1.

In some embodiments, the solvent consists of the major component and the minor component.

In some embodiments, in the first step the compound according to Formula I' is used in stoichiometric excess. In other words, a larger amount of the compound according to Formula I' is used than would theoretically be necessary for complete reaction with the hexachloroplatinate salt present in the reaction mixture.

The theoretical molar ratio of the compound according to Formula I' to water-soluble hexachloroplatinate salt for complete reaction is 2:1, since the product is a Pt(II) complex including two bidentate ligands each derived from one molecule of the compound according to Formula I'. So, in some embodiments, the compound according to Formula I' and the water-soluble hexachloroplatinate salt are added to the reaction mixture in the first step in a molar ratio of at least 2:1, for example more than 2:1, at least 2.1:1, at least 2.2:1, at least 2.3:1, at least 2.4:1 or at least 2.5:1. In some embodiments, the molar ratio is at least 3:1, for example at least 3.5:1 or at least 4:1.

The use of excess amounts of the compound according to Formula I' in the first step leads to an improved overall yield of product, especially when the molar ratio is at least 3:1, for example at least 4:1.

In some embodiments, the first step of the method comprises adding water-soluble hexachloroplatinate salt and a compound according to Formula I' to the solvent as described above, i.e. the single solvent or suitable mixture of solvents. Preferably, the first step of the method comprises adding the hexachloroplatinate salt and compound according to Formula I' to a solvent comprising water, preferably deionised water, as a major component, and the minor component described above.

In some embodiments, the first step of the method comprises preparing an aqueous solution of the hexachloroplatinate salt, preparing a solution of the compound according to Formula I' in a solvent comprising a C₁₋₆ aromatic, alicyclic or aliphatic organic compound, and mixing the two solutions to provide the reaction mixture. In some embodiments, the solution of the compound according to Formula I' comprises water and the C₁₋₆ aromatic, alicyclic or aliphatic organic compound.

In some embodiments, the water-soluble hexachloroplatinate salt is present in the reaction mixture such that a solution is provided with a molar concentration of hexachloroplatinate salt of at least 0.01M, for example at least 0.015M, at least 0.02M, at least 0.025M, at least 0.03M or at least 0.035M. In some embodiments, the molar concentration is up to 0.1M, for example up to 0.9M, up to 0.8M, up to 0.7M, up to 0.6M or up to 0.5M.

In some embodiments, the compound according to Formula I' is added to the solution such that the molar ratio of the compound according to Formula I' to water-soluble hexachloroplatinate salt is as defined above.

In preparing the reaction mixture in the first step, the water-soluble hexachloroplatinate salt and the compound according to Formula I' may be added in any order.

In some embodiments, in the first step the reaction mixture further comprises a base. The base is selected from any base strong enough to deprotonate the X group of the compound according to Formula I'. The base should also be soluble in the solvent used in the reaction.

The base acts to deprotonate the X group of the compound according to Formula I' to facilitate the reaction with Pt. In some embodiments, the base does not comprise an amine. Amine bases may be detrimental to the reaction because the nitrogen atom will compete with the X group of the compound according to Formula I' as a coordinating species to Pt.

In some embodiments, the base comprises a sodium salt. Sodium salts are preferred because any sodium hexachloroplatinate which forms is soluble and the hexachloroplatinate remains available in the reaction mixture for reaction with the compound according to Formula I'. Bases comprising potassium salts are less suitable because potassium hexachloroplatinate is a relatively insoluble solid and potassium hexachloroplatinate may precipitate out of solution, reducing the amount of Pt species available for reaction with the compound according to Formula I'.

In some embodiments, the base is NaHCO₃. Other suitable choices of base will be apparent to the skilled person.

In some embodiments, the base is present in a solution with the compound according to Formula I' and this solution is then mixed with the aqueous solution of the hexachloroplatinate salt to provide the reaction mixture.

In some embodiments, the first step of the method comprises adding the base to the reaction mixture to provide an aqueous solution having a molar concentration of base of at least 0.05M, for example at least 0.055M, for example at least 0.06M, for example at least 0.065M, for example at least 0.07M, for example at least 0.075M. In some embodiments base is added to provide a molar concentration of base of up to 1M, for example up to 0.95M, for example up to 0.9M.

In some embodiments, the first step comprises (after preparation of the reaction mixture) leaving the reaction mixture to react for at least 10 minutes, for example at least 11 minutes, at least 12 minutes, at least 13 minutes, at least 14 minutes or at least 15 minutes. In some cases, the reaction mixture can be left to react at for at least an hour, for example at least 2 hours, at least 2.5 hours, at least 3 hours, at least 3.5 hours, at least 4 hours, at least 4.5 hours, at least 5 hours, at least 5.5 hours or at least 6 hours at a temperature T₁ before the any further step is carried out. In some embodiments, T₁ is in the range 20 to 30°C, for example 20 to 25°C. In some embodiments, T₁ is room temperature. Preferably the reaction is performed at atmospheric pressure.

In some embodiments, the reaction mixture is stirred during the reaction. Preferably, the stirring is continuous.

The method comprises an intermediate step (performed after the first step but before the second step) in which a reducing agent is added to the reaction mixture. This serves the purpose of assisting the reduction of Pt(IV) to Pt(II) and improves the product yield. The crystallinity and activity of the final product may also be improved.

In this intermediate step, the intermediate product formed in step (i) is reduced with a mild reducing agent. The reduction is partial reduction of Pt(IV), thereby providing Pt(II), without full reduction to Pt(0).

The reducing agent added to the reaction mixture in the intermediate step may be any reducing agent which will provide partial reduction of Pt(IV) to Pt(II), without full reduction to Pt(0). In some embodiments, the reducing agent is not ascorbic acid. Ascorbic acid is a strong reducing agent which will lead to full reduction and the undesirable formation of Pt(0). In some embodiments, the reducing agent is a mild reducing agent. The reducing agent is an alcoholic reducing agent, that is a compound containing one or more -OH functional groups.

An alcoholic reducing agent may be any suitable organic compound containing one or more -OH functional groups which can act as a reducing agent to reduce the Pt(IV) in the water-soluble hexachloroplatinate salt to Pt(II). In some embodiments, the alcoholic reducing agent is a simple C₁₋₆ alcohol containing a single -OH group, for example methanol, ethanol, propanol, isopropanol, or any butyl alcohol isomer. In some embodiments, the alcoholic reducing agent is selected from ethanol and isopropanol. In some embodiments, the alcoholic reducing agent is ethanol.

In some embodiments, the ratio of the molar amount of reducing agent added in the intermediate step to the molar amount of Pt in the reaction mixture is at least 10:1, for example at least 11:1, at least 12:1, at least 13:1, at least 14:1 or at least 15:1. In some embodiments, the ratio of the molar amount of reducing agent added in the intermediate step to the molar amount of Pt in the reaction mixture is up to 200:1, for example up to 190:1, up to 180:1 or up to 170:1. Molar ratios within this range have been observed to provide a product in good yield with high activity. When too little reducing agent is used the catalytic activity of the product is poor, and without wishing to be bound by theory it is thought that this may be due to the formation of an inactive or poorly active isomer.

In some embodiments, the intermediate step further comprises the addition of a further amount of the compound according to Formula I' at the same time as the addition of the reducing agent. However, in some embodiments the reducing agent is added in the absence of any compound according to Formula I' and additional compound according to Formula I' is only added afterwards, in the second step. This is preferred because higher product yields are achieved this way.

In some embodiments the intermediate step immediately follows the first step, with no intervening steps.

The intermediate step comprises, after the addition of the reducing agent, heating the reaction mixture to an elevated temperature T₂ of at least 50 °C, for example at least 55 °C, for example at least 60 °C, for example at least 65 °C, for example at least 70 °C, for example at least 75 °C, for example at least 80 °C. In some embodiments, T₂ is up to 95 °C, for example up to 90 °C.

In some embodiments, the intermediate step also comprises maintaining the temperature T₂ for at least 2 hours, for example at least 2.5 hours, for example at least 3 hours, for example at least 3.5 hours, for example at least 4 hours, for example at least 4.5 hours, for example at least 5 hours.

The method further comprises, after the intermediate step, the second step of adding a further amount of the compound according to Formula I' to the reaction mixture. The compound according to Formula I' added in the second step may be the same compound as added in the first step, or may be a different compound according to Formula I'. However, it is preferred that the *same* compound as initially added to the reaction mixture is added again in the second step, after the intermediate step. So, for example, if salicylaldehyde is added to the reaction mixture in the first step, then salicylaldehyde is added again to the reaction mixture in the second step.

The addition of further compound according to Formula I' to the reaction mixture in step (ii) is necessary in order to form the correct active product in good yield. Without this step, full reduction to Pt(0) occurs and the desired product does not form in any useful amount.

In some embodiments the second step immediately follows the intermediate step, with no intervening steps.

In some embodiments, the compound according to Formula I' is added in an excess amount in the second step.

In some embodiments, the amount of the compound according to Formula I' added in the second step is equal to or more than the amount added during the first step.

In some embodiments, the ratio of the molar amount of compound according to Formula I' added in step (ii) to the molar amount of Pt in the reaction mixture is at least 1:1, for example at least 1.5:1 or at least 2:1. In some embodiments, the ratio of the molar amount of compound according to Formula I' added in step (ii) to the molar amount of Pt in the reaction mixture is up to 10:1, for example up to 9:1 or up to 8:1. In this way, good yields of a highly catalytically active complex can be achieved.

The use of the intermediate reduction step followed by the second step in which a further quantity of the compound according to Formula I' is added drives the formation of a much higher yield of product. Without wishing to be bound by theory, the inventors believe that the addition of the further quantity of the compound according to Formula I' may help to drive an equilibrium towards the desired product.

In some embodiments, the second step comprises (after the addition of the further quantity of compound according to Formula I') heating the reaction mixture to an elevated temperature T₃ of at least 50 °C, for example at least 55 °C, for example at least 60 °C, for example at least 65 °C, for example at least 70 °C, for example at least 75 °C, for example at least 80 °C. In some embodiments, T₃ is up to 95 °C, for example up to 90 °C.

In some embodiments, the reaction mixture is held at temperature T₃ until the formation of a precipitate is observed. In some embodiments, the reaction mixture is held at temperature T₃ for a period of at least 30 mins, for example at least 1 hour.

In some embodiments, in the second step the compound according to Formula I' is added as a solution in a solvent. In some embodiments, the solution is a mixture of water (preferably deionised water) and an organic solvent, such as ethanol. In some embodiments, the solution further comprises a base. In some embodiments, the base is NaHCO₃.

In some embodiments, the method further comprises isolating the product from the reaction mixture. The isolation of the product may be achieved by any suitable method well-known to those skilled in the art. Such methods may include filtration, for example through filter paper when the product is a precipitate. Additionally or alternatively, the removal of solvent by drying may be used to isolate the product, optionally assisted by vacuum and/or heat. In some embodiments, further steps are included in the isolation step, such as drying and/or purification of the product. Such drying and purification steps are also well-known to the skilled person. The isolated (and optionally purified) product may then be used as a photo-activatable hydrosilylation catalyst to provide a wide variety of photo-curable compositions, as explained in more detail below.

Nevertheless, in some embodiments the product may also be used as a catalyst in its raw form without the need for any isolation or purification steps.

### Compound according to Formula I'

The method of the first aspect involves the reaction of a water-soluble hexachloroplatinate salt such as chloroplatinic acid, H₂PtCl₆, with a compound according to Formula I' as defined in claim 1, or a salt thereof. Furthermore, an additional quantity of the compound according to Formula I', or a salt thereof, is added to the reaction mixture in the second step of the method.

In some embodiments, X is OH.

Y and Z, together with the two carbon atoms to which they are attached, form an unsubstituted benzene group or an unsubstituted naphthalene group .

In some embodiments, the compound according to Formula I' is salicylaldehyde, having the following structure, or a salt thereof:

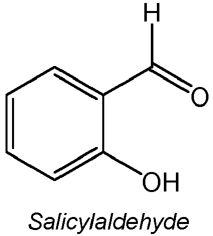

In some embodiments, the compound according to Formula I' is 2-hydroxy-1-naphthaldehyde, having the following structure, or a salt thereof:

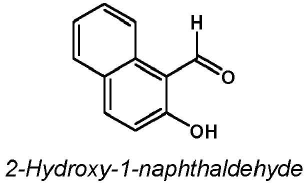

### Pt(II) complex according to Formula Ia

A second aspect of the invention is a Pt(II) complex according to Formula la: 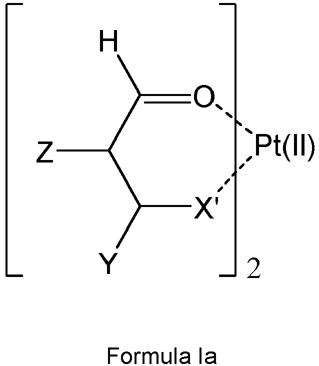 wherein
X' is selected from O, S and NH, and
Y and Z, together with the two carbon atoms to which they are attached, form an unsubstituted benzene group

In some embodiments, X' is O.

In some embodiments, Pt(II) complex has the following structure:

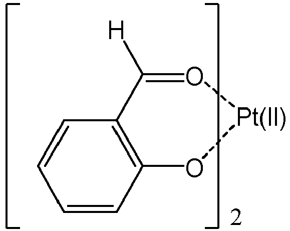

The Pt(II) complex according to Formula Ia is formed in the synthesis method according to the first aspect of the invention.

### Hydrosilylation method

A third aspect of the invention is a method of performing a hydrosilylation reaction catalysed by a Pt(II) complex according to Formula I.

In some embodiments, the hydrosilylation reaction is photoactivated. In some embodiments, the hydrosilylation reaction is UV activated.

A catalyst which allows the hydrosilylation to be photoactivated ensures a significantly reduced curing time, which is essential for products of larger size where activation by other methods would lead to very slow curing. The use of a photoactivatable catalyst also means that thermally sensitive materials, such as polypropylene, can be used in the product without adverse effects which may be caused by e.g. thermal curing.

For extruded products, the use of a photoactivatable catalyst provides a lower energy requirement for extrusion and a higher line speed. Furthermore, common issues arising from the use of filler materials, such as silica, and colourants could be overcome. Common filler materials such as silica and colourants often absorb in the UV range, which can prevent catalyst activation or reduce the effective activity of a catalyst. Such problems are ameliorated by the use of a more active catalyst, such as the catalysts described herein.

In some embodiments, the method comprises the cross-linking of a siloxane polymer or copolymer. For example, a composition may be provided which comprises a siloxane polymer or copolymer along with a suitable amount of the Pt(II) complex according to Formula I and the composition is activated in order to cross-link the siloxane polymer.

In some embodiments the curable composition also comprises a cross-linking agent, although this may not be necessary if the siloxane polymer or copolymer is inherently cross-linkable, for example due to functionalisation with vinyl groups. In some embodiments, this cross-linking agent is a compound comprising terminal unsaturation, for example 1,3-butadiene. In some embodiments, the cross-linking agent is a siloxane polymer or copolymer comprising terminal unsaturation, for example a vinyl terminated poly(dimethylsiloxane). During the hydrosilylation, the catalyst will accelerate the cross linking of the chains of silicone polymer or copolymer.

In some embodiments, the method is used in the manufacture of a cross-linked silicone polymer or copolymer product selected from an elastomer, an adhesive, a release liner and an electronic product (for example, an LED lens or a silicone-coated electronic chip).

In some embodiments, the method comprises an additive layer manufacturing method. For example, the method may comprise repeated steps of 'printing' layers of curable composition which are then partially or fully cured before a further layer is printed on top of the previous one.

In some embodiments, the method comprises injection moulding. For example, a curable composition may be injected into a mould of the desired shape and size and the composition may then be cured by photoactivation of the Pt(II) catalyst before the mould is removed.

The hydrosilylation method finds particular use in the manufacture of electronic components. The fast curing rate by photoactivation of the Pt(II) complex ensures an increased production rate and good control of the final cured shape of the product, which is important for providing precision electronic products such as LED lenses. Furthermore, activation by visible or UV light means that thermal curing is avoided and there is no risk of overheating sensitive electronics, especially when the compositions are used to coat or encapsulate electronic chips.

### Other aspects of the invention

Also described in a fourth aspect of the invention is the use of a Pt(II) complex according to Formula I as a photoactivatable catalyst in a hydrosilylation reaction. In some embodiments, this hydrosilylation reaction is the cross-linking of a silicone polymer or copolymer.

A fifth aspect of the invention is a curable composition comprising a Pt(II) complex according to Formula I.

In some embodiments, the curable composition is a curable silicone composition.

In some embodiments, the curable composition is a curable adhesive composition.

In some embodiments, the curable composition comprises a siloxane polymer or copolymer and a suitable quantity of the Pt(II) complex according to Formula I. The curable composition may also comprise a cross-linking agent, although this may not be necessary if the siloxane polymer or copolymer is inherently cross-linkable, for example due to functionalisation with vinyl groups. The composition may also contain one or more additives such as fillers, colourants, solvents etc., which are well-known to the skilled person and commonly used in such compositions.

In some embodiments, the curable composition is a UV or visible light curable composition. In this way, thermal curing is avoided and it is possible to use thermally sensitive ingredients such as polypropylene. Furthermore, products in the vicinity of the curable composition are not damaged by overheating.

A sixth aspect of the invention is a cured silicone product obtained by or obtainable by photoactivated curing of a composition according to the fifth aspect.

In some embodiments, the silicone product according to the sixth aspect is a release liner, an elastomer, an adhesive or an electronic product (such as an LED lens, or a coating on an electronic chip).

Also described in a seventh aspect of the invention is a Pt(II) complex made by a method according to the first aspect. Of course, the applications of the third to sixth aspects apply to the Pt(II) complex of the seventh aspect in an analogous manner.

The invention will now be further described with reference to the following non-limiting Figures and Examples. Other embodiments of the invention will occur to those skilled in the art in the light of these.

### Figures

Figure 1 is a plot of an infra-red spectrum taken from the product of Example 1.
Figure 2 is a plot of an X-ray photoelectron spectrum taken from the product of Example 1.
Figure 3 shows the crystal structure of the product of Example 3.
Figure 4 shows a UV/Vis spectrum taken from the product of Example 3.
Figure 5 shows a UV/Vis spectrum taken from various samples.
Figure 6 shows a fluorescence spectrum for a siloxane polymer.
Figure 7 shows fluorescence spectra for the product of Example 3, in acetone and in siloxane.
Figure 8 shows fluorescence spectra for Pt(acac)₂, in acetone and in siloxane.
Figure 9 shows a TGA trace for the product of Example 3.
Figure 10 is a ¹H NMR spectrum on the product of Example 2.
Figure 11 shows the same spectrum as Figure 10 on a different scale.
Figure 12 is a ¹³C NMR spectrum on the product of Example 2.
Figure 13 is a ¹⁹⁵Pt NMR spectrum on the product of Example 2.

### Examples

### Comparative Example 1

A 25 wt% aqueous solution of H₂PtCl₆ (1.69 g, 2.17 mmol) was added to deionised water (70 mL) and a mixture of salicylaldehyde (2.45 mL, 2.8 g, 22.8 mmol) and NaHCO₃ (0.765 g, 9.12 mmol) in EtOH (15 mL) was then added. The reaction mixture was heated under reflux with stirring for 1 hour. The colour changed from bright orange to red.

The solution was then allowed to cool naturally to room temperature. An orange oil has separated from an orange aqueous layer. A small amount of orange precipitate was observed on the surface. The precipitate was collected and products were isolated from the organic and aqueous layers. The precipitate was found by NMR analysis to contain no organic material, and was presumably unreacted Na₂PtCl₆. The products in the organic and aquous layers were analysed by IR but found not to contain the desired product.

### Comparative Example 2

A 25 wt% aqueous solution of H₂PtCl₆ (1.69 g, 2.17 mmol) was added to deionised water (70 mL) and a mixture of salicylaldehyde (2.45 mL, 2.8 g, 22.8 mmol) and NaHCO₃ (0.765 g, 9.12 mmol) in EtOH (10 mL) was then added giving a bright orange solution with a small amount of whitish oil. The reaction mixture was heated under reflux at 100 °C for 5 hours before being allowed to cool to room temperature. Full reduction to platinum black occurred and the reaction was abandoned.

### Comparative Example 3

A 25 wt% aqueous solution of H₂PtCl₆ (1.69 g, 2.17 mmol) was added to deionised water (50 mL) and a mixture of salicylaldehyde (2.45 mL, 2.8 g, 22.8 mmol) and NaHCO₃ (0.765 g, 9.12 mmol) in EtOH (10 mL) was then added. The reaction mixture was heated at 90 °C under stirring for 16 hours. The platinum underwent full reduction to platinum black and the reaction was abandoned.

### Comparative Example 4

A 25 wt% aqueous solution of H₂PtCl₆ (1.69 g, 2.17 mmol) was added to a mixture of salicylaldehyde (0.925 mL, 1.06 g, 8.68 mmol) and NaHCO₃ (1.09 g, 13.02 mmol) in EtOH (50 mL). The reaction mixture was heated at 80 °C under stirring. After 30 mins the colour remained orange, but full reduction to platinum black occurred after 1 hour and the reaction was abandoned.

### Comparative Example 5

A 25 wt% aqueous solution of H₂PtCl₆ (1.69 g, 2.17 mmol) was added to a mixture of salicylaldehyde (0.925 mL, 1.06 g, 8.68 mmol) and NaHCO₃ (1.09 g, 13.02 mmol) in EtOH (50 mL). The reaction mixture left stirring at room temperature for 2 days. The reaction mixture was then filtered to remove a white precipitate from a bright orange solution. The solvent was allowed to evaporate from the bright orange solution which then separated into two components, a small amount of brown solution and a bright orange solution.

The bright orange solution was miscible in water and suspected to be unreacted H₂PtCl₆.

The brown solution gave an orange oil which was tested for catalytic activity in gelling of a siloxane polymer. No catalytic activity was observed.

### Comparative Example 6

A 16.13 wt% aqueous solution of Pt(IV) nitrate (2.624 g, 2.17 mmol) was added to deionised water (50 mL) and a mixture of salicylaldehyde (2.45 mL, 2.8 g, 22.8 mmol) and NaHCO₃ (0.765 g, 9.12 mmol) in EtOH (15 mL) was then added. The reaction mixture gave off gas and produced an orange precipitate. Stirring was continued at room temperature for 2 hours. The reaction mixture was then filtered to give an orange precipitate and an orange solution. The precipitate was washed with water and diethylether. The product showed no solubility in toluene, dichloromethane, MIBK or acetone. The product was tested for catalytic activity but none was found. XPS analysis was performed which showed that little reduction of the platinum took place and the desired product was not formed. The major product appeared to be Pt^{IV}(HCO₃)₄.

### Comparative Example 7

A reaction was performed as in Comparative Example 6, except that no base (NaHCO₃) was added. The product characteristics were the same as for Comparative Example 6.

### Comparative Example 8

Hexahydroxyplatinic acid, H₂Pt(OH)₆ (0.661 g, 2.17 mmol) was stirred in deionised water (50 mL). To this a mixture of salicylaldehyde (2.45 mL, 2.8 g, 22.8 mmol) in EtOH (15 mL) was then added. The H₂Pt(OH)₆ starting material was not soluble in water and formed a pale yellow/white suspension. No change occurred on addition of the salicylaldehyde. NaHCO₃ (0.765 g, 9.12 mmol) was added to the reaction mixture, which turned yellow but still contained the pale precipitate. The mixture was heated at 103 °C for 30 mins. Full reduction of the platinum to a dark brown/black precipitate occurred and the reaction was abandoned.

### Comparative Example 9

A 25 wt% aqueous solution of H₂PtCl₆ (1.69 g, 2.17 mmol) was added to a mixture of salicylaldehyde (0.49 mL, 0.56 g, 4.56 mmol) and NaHCO₃ (0.765 g, 9.12 mmol) in deionised water (100 mL) and EtOH (10 mL). The reaction mixture was stirred at room temperature for 24 hours. 37% aqueous formaldehyde solution (0.323 mL, 0.352 g, 4.34 mmol) in 10 mL water was added to the reaction mixture. The reaction mixture was heated at 93 °C with stirring for 5 hours. The colour gradually changed from yellow to red/orange, but then the platinum underwent full reduction to Pt(0). The reaction was abandoned.

### Comparative Example 10

A 25 wt% aqueous solution of H₂PtCl₆ (1.69 g, 2.17 mmol) was added to a mixture of salicylaldehyde (0.49 mL, 0.56 g, 4.56 mmol) and NaHCO₃ (0.765 g, 9.12 mmol) in deionised water (100 mL) and EtOH (10 mL). The reaction mixture was stirred at room temperature for 24 hours. Oxalic acid dehydrate (0.137 g, 1.09 mmol) was added to the reaction mixture and the mixture was heated to 93 °C and stirred for 6 hours. The colour gradually changed from yellow to orange to red but no precipitate was formed. The mixture was left to stand at room temperature for 3 days, after which time a very small amount of orange precipitate appeared to have formed. The mixture was heated again and turned black. The reaction was abandoned.

### Comparative Example 11

A 25 wt% aqueous solution of H₂PtCl₆ (1.69 g, 2.17 mmol) was added to a mixture of salicylaldehyde (0.49 mL, 0.56 g, 4.56 mmol) and NaHCO₃ (0.765 g, 9.12 mmol) in deionised water (100 mL) and EtOH (10 mL). Stirring was continued at room temperature overnight.

2-hydroxybenzylalcohol (0.269 g, 2.17 mmol) in EtOH (20 mL) was added and the reaction mixture was heated to 73 °C. After 1.5 hours the reaction mixture had turned from a yellow colour to a dark orange, but no precipitate had occurred. The reaction was abandoned.

### Example 1 (comparative)

A 25 wt% aqueous solution of H₂PtCl₆ (1.69 g, 2.17 mmol) was added to a mixture of salicylaldehyde (0.49 mL, 0.56 g, 4.56 mmol) and NaHCO₃ (0.765 g, 9.12 mmol) in deionised water (100 mL) and EtOH (10 mL). The reaction mixture was stirred overnight at room temperature.

Salicylaldehyde (2 mL, 2.28 g, 18.62 mmol) in EtOH (20 mL) was added and the reaction mixture was heated to 93 °C and held at that temperature for 5 hours. The reaction mixture was then allowed to cool naturally to room temperature and it was observed that an orange precipitate had formed. The precipitate was collected by filtration, leaving a yellow filtrate.

The yield was 57 mg of product (6%).

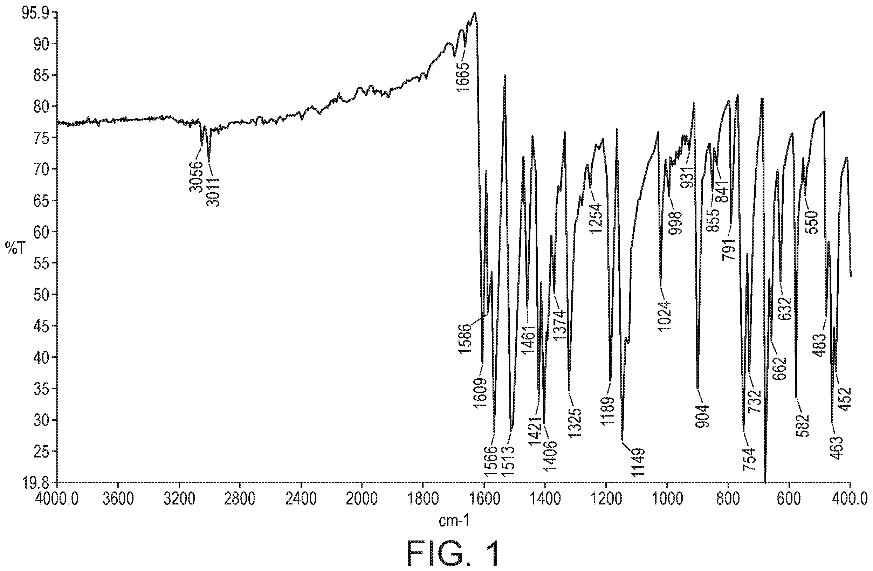

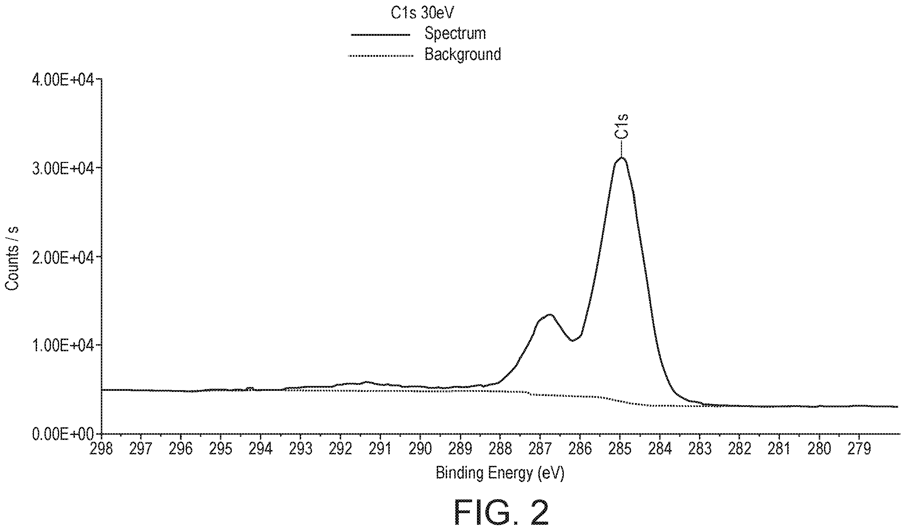

IR and XPS spectra were obtained for the product, confirming that it was the desired product according to Formula A below. The IR and XPS spectra are shown in Figures 1 and 2 respectively.

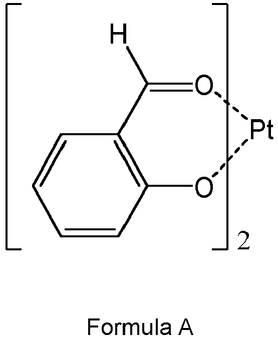

Based on the XPS results, the elemental analysis was estimated as follows:

| **Element** | **Amount (at%)** |
|---|---|
| C | 74.7 |
| O | 20.2 |
| Pt | 4.5 |
| Cl | 0.5 |
| Na | 0.2 |

The carbon 1s signal contains two main signals, the main signal appears at 285 eV (used for the binding energy scale correction) and is assigned to alkyl functions. The satellite feature at -291 eV is indicative of an aromatic species. The peak at -287 eV is due to carbon-oxygen functions.

The XPS shows that reduction to Pt(II) has taken place. There are very small amounts of residual Cl and Na. The ratio of carbon and oxygen to Pt is slightly higher than would be expected, suggesting the presence of some residual HCO₃⁻.

CHN elemental analysis was also carried out using a CEE-440 Elemental Analyzer from Exeter Analytical Inc.

Pt elemental analysis was carried out using ICP. Microwave digestion was carried out in 10 mL reverse Aqua Regia in quartz vessels. Solutions were made up in 100 mL volumetric flasks with the addition of yttrium as an internal standard. Samples were run on an Agilent ICP-OES 5110 SVDV instrument.

The results are shown below:

| **Element** | **Amount (wt%)** |
|---|---|
| C | 39.0 |
| H | 2.39 |
| N | 0.08 |
| Pt | 42.6 |

The ratio of C:H is 1.4:1, which is as expected for the singly deprotonated salicylaldehyde ligand. The CHN analysis fits with that expected for two deprotonated salicylaldehyde ligands per Pt.

### Example 2 (comparative)

The reaction in Example 1 was repeated, except that after the addition of salicylaldehyde the mixture was heated at a lower temperature of 73 °C for a longer period (overnight). Some orange precipitate was formed and was collected by filtration.

The yield of product was 70 mg (7.4 %).

### Example 3

A 25 wt% aqueous solution of H₂PtCl₆ (1.69 g, 2.17 mmol) was added to a mixture of salicylaldehyde (0.49 mL, 0.56 g, 4.56 mmol) and NaHCO₃ (0.765 g, 9.12 mmol) in deionised water (100 mL) and EtOH (10 mL). The reaction mixture was stirred overnight at room temperature.

EtOH (20 mL) was added and the reaction mixture was heated to 83 °C and held at that temperature for 6 hours. The mixture was then allowed to cool to room temperature and stirred at room temperature overnight. The colour had changed to orange and a very small amount of precipitate had occurred.

Salicylaldehyde (1 mL, 9.3 mmol) and NaHCO₃ (0.78 g, 9.28 mmol) in deionised water (10 mL) was added to the reduced reaction mixture and the temperature was raised again to 83 °C and held at that temperature. After 1 hour a product had begun to precipitate. After 2 hours this product was collected by filtration.

The product yield was 0.305 g (32.1%).

Comparing the yields of Example 3 with those of Examples 1 and 2, it can be seen that performing an intermediate reduction step with ethanol, followed by a distinct subsequent step in which more salicylaldehyde is added, drives the formation of the product in higher yield.

### Example 4

A 25 wt% aqueous solution of H₂PtCl₆ (1.69 g, 2.17 mmol) was added to a mixture of excess salicylaldehyde (1 mL, 9.3 mmol) and NaHCO₃ (0.78 g, 9.28 mmol) in deionised water (100 mL) and EtOH (10 mL). The reaction mixture was stirred overnight at room temperature.

EtOH (20 mL) was added and the reaction mixture was heated to 83 °C. After 3 hours the reaction mixture had turned bright orange but there was no sign of precipitate. The pH was tested and was found to be around 7.

Salicylaldehyde (1 mL, 9.3 mmol) and NaHCO₃ (0.78 g, 9.28 mmol) in deionised water (10 mL) was added to the reaction mixture and the temperature was raised again to 83 °C and held at that temperature. After 2 hours a small amount of product had begun to precipitate. The reaction mixture was stirred at room temperature overnight yielding more precipitate. The temperature was raised to 83 °C again for four hours and then allowed to cool to room temperature and the precipitate collected by filtration through 541 paper.

The product yield was 0.406 g (42.8%).

The use of ethanol alone during the reduction step followed by the addition of excess salicylaldehyde during a further step drives the formation of the product in much higher yield. The use of a large excess of salicylaldehyde in the initial reaction with H₂PtCl₆ also seems to contribute to the increased product yield.

### Example 5

In this Example the synthesis method of Example 4 was carried out at double scale to produce a larger quantity of product and test the scalability of the method.

A 25 wt% aqueous solution of H₂PtCl₆ (3.38 g, 4.34 mmol) was added to a mixture of salicylaldehyde (2 mL, 18.6 mmol) and NaHCO₃ (1.56 g, 18.6 mmol) in deionised water (200 mL) and EtOH (20 mL). Stirring was continued at room temperature overnight.

EtOH (40 mL) was added and the reaction mixture was heated at 83 °C for 4 hours.

A further solution of salicylaldehyde (2 mL, 18.6 mmol) and NaHCO₃ (1.56 g, 18.6 mmol) in deionised water (20 mL) was added and heating was continued for another 2 hours. The reaction mixture was then left stirring at room temperature overnight. The temperature was raised to 83 °C again for another 4 hours before the reaction mixture was allowed to cool to room temperature and the product collected by filtration through 541 paper.

The yield of product (denoted 'Product A') at this stage was 0.720 g.

The filtrate was heated for a further 6 hours, yielding more precipitate, which was collected in the same way.

The yield of product (denoted 'Product B') at this stage was 0.130 g.

The total yield of Products A and B was 0.850 g (44.8%).

It is clear that the process can be scaled up to double the quantity without any adverse effect on product yield.

### Example 6 (Comparative)

A 25 wt% aqueous solution of H₂PtCl₆ (1.69 g, 2.17 mmol) was added to a mixture of salicylaldehyde (0.49 mL, 0.56 g, 4.56 mmol) and NaHCO₃ (0.765 g, 9.12 mmol) in deionised water (100 mL). The yellow reaction mixture turned an even brighter shade of yellow on addition of the platinum starting material. There still appeared to be some immiscible droplets of salicylaldehyde present, but no precipitate occurred.

EtOH (10 mL) was then added. Stirring was continued at room temperature overnight.

After stirring overnight there was no evidence of hydrolysis of the platinum - the colour remained yellow.

Salicylaldehyde (1 mL, 1.14 g, 9.31 mmol) in EtOH (10 mL) was added to a 55 mL quantity of the reaction mixture and the reaction mixture was heated at reflux for 5 hours, then allowed to cool and stirred at room temperature overnight. The yellow colour became a deeper more orange shade and a red/orange oil became separated from the solution. The oil was soluble in dichloromethane. 60 mL of this was used to separate it from the remaining lighter orange aqueous layer. The organic layer was allowed to evaporate leaving a precipitate ('Product 6A').

The yield was 35%.

The precipitate appeared to be made up of two components - an orange powder and a brown powder. It is possible that the brown powder is formed due to hydrolysis when in contact with the water, or from formation of multi-nuclear species once concentrated.

### Example 7

A 25 wt% aqueous solution of H₂PtCl₆ (1.69 g, 2.17 mmol) was added to a mixture of salicylaldehyde (0.49 mL, 0.56 g, 4.56 mmol) and NaHCO₃ (0.765 g, 9.12 mmol) in deionised water (100 mL) and isopropanol (10 mL). Stirring was continued at room temperature overnight.

Isopropanol (20 mL) was added and the reaction mixture was heated at 83 °C for 4 hours.

A further solution of salicylaldehyde (1 mL, 9.3 mmol) and NaHCO₃ (0.78 g, 9.28 mmol) in deionised water (10 mL) was added and heating was continued for another 3 hours. No precipitate had occurred during this time, but after leaving at room temperature overnight heating was continued at 83 °C for a further 6 hours, after which the reaction mixture was allowed to cool to room temperature and the orange precipitate collected by filtration through 541 paper. It was washed with more deionised water and then dried in a vacuum oven at 40 °C overnight.

The yield was 0.283 g (29.8%).

This shows that isopropanol is equally useful as a reducing agent as an alternative to ethanol, without requiring any more work-up.

### Example 8

This Example was carried out to investigate the effect of varying the quantity of salicylaldehyde added in the second step of the reaction.

### Method A - no further salicylaldehyde addition (Comparative)

A 25 wt% aqueous solution of H₂PtCl₆ (1.69 g, 2.17 mmol) was added to a mixture of salicylaldehyde (0.49 mL, 0.56 g, 4.56 mmol) and NaHCO₃ (0.765 g, 9.12 mmol) in deionised water (100 mL) and EtOH (10 mL). Stirring was continued at room temperature for 15 minutes.

EtOH (20 mL) was added and the reaction mixture was heated at 83 °C for 4 hours.

No additions were made to the reaction mixture at this point and heating was continued for a further 3 hours. After leaving at room temperature overnight heating there was no sign of any precipitate. Heating was continued at 83 °C for a further 5 hours as standard. The reaction mixture turned black indicating that full reduction to Pt(0) had taken place.

### Method B - addition of 0.5 mL further salicylaldehyde

A 25 wt% aqueous solution of H₂PtCl₆ (1.69 g, 2.17 mmol) was added to a mixture of salicylaldehyde (0.49 mL, 0.56 g, 4.56 mmol) and NaHCO₃ (0.765 g, 9.12 mmol) in deionised water (100 mL) and EtOH (10 mL). Stirring was continued at room temperature for 15 minutes.

EtOH (20 mL) was added and the reaction mixture was heated at 83 °C for 4 hours.

Salicylaldehyde (0.5 mL, 4.65 mmol) in deionised water (10 mL) with NaHCO₃ (0.39 g, 4.64 mmol) was added to the reduced reaction mixture and heating was continued for a further 3 hours. After leaving at room temperature overnight heating was continued at 83 °C for a further 5 hours, after which the reaction mixture was allowed to cool to room temperature and the orange precipitate collected by filtration through 541 paper. It was washed with more deionised water and then dried in a vacuum oven at 40 °C overnight.

The yield was 0.276 g (29.1%).

### Method C - addition of 2 mL further salicylaldehyde

A 25 wt% aqueous solution of H₂PtCl₆ (1.69 g, 2.17 mmol) was added to a mixture of salicylaldehyde (0.49 mL, 0.56 g, 4.56 mmol) and NaHCO₃ (0.765 g, 9.12 mmol) in deionised water (100 mL) and EtOH (10 mL). Stirring was continued at room temperature for 15 minutes.

EtOH (20 mL) was added and the reaction mixture was heated at 83 °C for 4 hours.

Salicylaldehyde (2 mL, 18.6 mmol) in deionised water (20 mL) with NaHCO₃ (1.56 g, 18.56 mmol) was added to the reduced reaction mixture and heating was continued for a further 3 hours. After leaving at room temperature overnight heating was continued at 83 °C for a further 5 hours, after which the reaction mixture was allowed to cool to room temperature.

The yield was 0.342 g (36 %).

### Example 9 (Comparative)

A 25 wt% aqueous solution of H₂PtCl₆ (1.69 g, 2.17 mmol) was added to a mixture of salicylaldehyde (0.49 mL, 0.56 g, 4.56 mmol) and NaHCO₃ (0.765 g, 9.12 mmol) in deionised water (100 mL) and EtOH (10 mL). Stirring was continued at room temperature for 60 hours giving a yellow solution. A sample was taken at this point for TLC analysis.

An excess of salicylaldehyde (2 mL, 2.28 g, 18.62 mmol) in EtOH (20 mL) was added and the reaction mixture was heated at 73 °C overnight. The reaction mixture changed from yellow to orange and an orange precipitate was formed. There also appeared to be an oily orangy-yellow material which made collection of the precipitate by filtration more difficult. It was therefore washed with MeOH, in which the product appeared to be only very slightly soluble. No further material was collected from the MeOH washings.

The yield was 83 mg (8.75%).

### TLC analysis

TLC was carried out on the reaction mixture after the first room temperature step, CPA, salicylaldehyde (in EtOH) and the sodium salt of salicylaldehyde (in EtOH). Silica TLC plates were used with a mobile phase of 80:20 DCM:pentane.

CPA: R_{f} = 0
Salicylaldehyde: R_{f} = 0.85
Salicylaldehyde + NaHCO3: R_{f} = 0.85
Fresh reaction mixture before heating: R_{f} = 0; R_{f} = 0.65
Reaction mixture after first step: R_{f} = 0; R_{f} = 0.65

TLC does not suggest that extending the first step makes any difference to how near completion that step is, however the ease of reduction of the reaction mixture in the second step suggests that there is a difference in the speciation; there could be a difference in the ratios of the two spots present that is not seen in the TLC.

### Example 10

A 25 wt% aqueous solution of H₂PtCl₆ (1.69 g, 2.17 mmol) was added to a mixture of 2-hydroxy-1-naphthaldehyde (0.785 g, 4.56 mmol) and NaHCO₃ (0.765 g, 9.12 mmol) in deionised water (100 mL) and EtOH (20 mL). The reaction mixture was stirred overnight at room temperature.

EtOH (10 mL) was added and the reaction mixture was heated to 83°C and held at that temperature for 6 hours. The mixture was then allowed to cool to room temperature and stirred at room temperature overnight. An orange/red precipitate was observed.

2-Hydroxy-1-naphthaldehyde (1.6 g, 9.3 mmol), EtOH (20 mL) and NaHCO₃ (0.78 g, 9.28 mmol) were added to the reduced reaction mixture and the temperature was raised again to 83°C and held at temperature for 5 hours. The reaction mixture was allowed to cool to room temperature resulting in further precipitation. This was collected by filtration.

It was observed that the precipitate comprises a mixture of red and orange species; the desired product and unreacted 2-hydroxy-1-naphthaldehyde, respectively. The product was washed with deionised water and diethyl ether to remove excess ligand.

The yield was 324 mg (27.8%).

### Crystal growth

### Example 11

Crystals of the product of Example 3 were grown as single crystals for analysis.

The following different methods were attempted in order to provide suitable crystals for testing.
1. Growth in acetone/water medium. This resulted in mixing of the two solvents and fast precipitation of the bright orange product.
2. Growth in DCM/hexane. This formed two distinct layers with slow mixing occurring at the interface. After being left for one week, it was found that some very small crystals had been deposited on the glass vessel in the upper layer, but the majority was deposited at the bottom of the flask and appears to have turned more brown in colour. It is thought that the product is not completely stable in dichloromethane.
3. Growth in chloroform/hexane. This formed two distinct layers with slow mixing occurring at the interface. Slightly larger crystals were formed, but still too small. It took longer for the product to turn brown.
4. Growth in chloroform: The product was dissolved in chloroform with heating, and immediately filtered before being stored in the freezer. Needle like crystals were formed
5. Growth in chloroform/hexane in freezer. Needle like crystals were formed

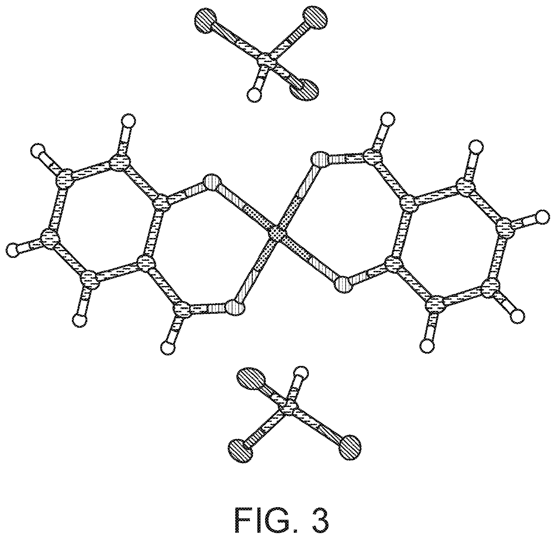

The crystal strcture was determined and is shown in Figure 3. It is triclinic with space group P-1. The results show that the product has the expected structure of two bidentate salicylaldehyde ligands coordinated to a central Pt atom through the oxygen atoms.

### IR and NMR

### Example 12

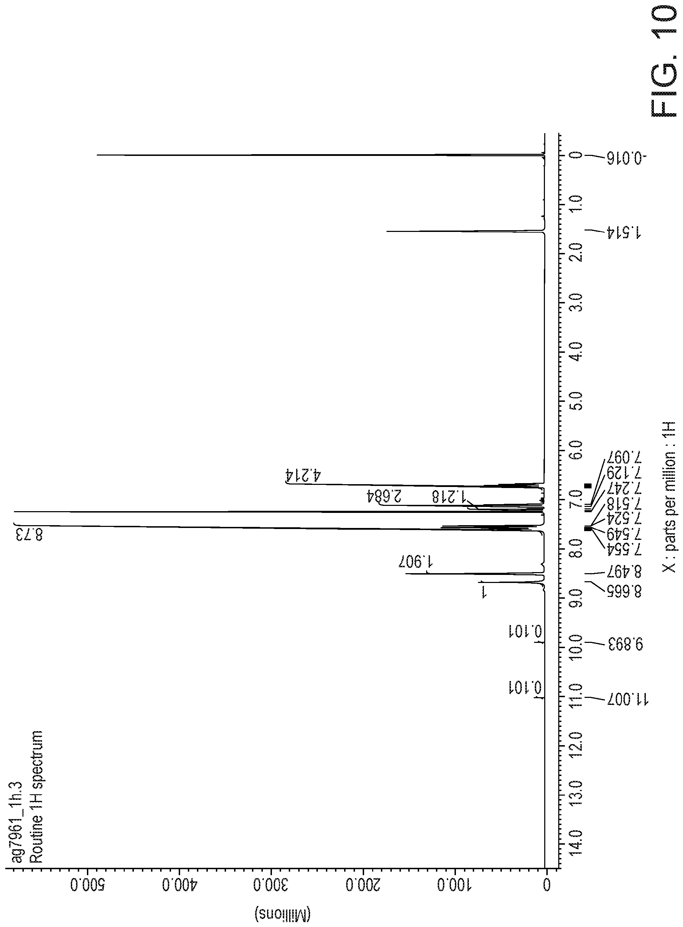

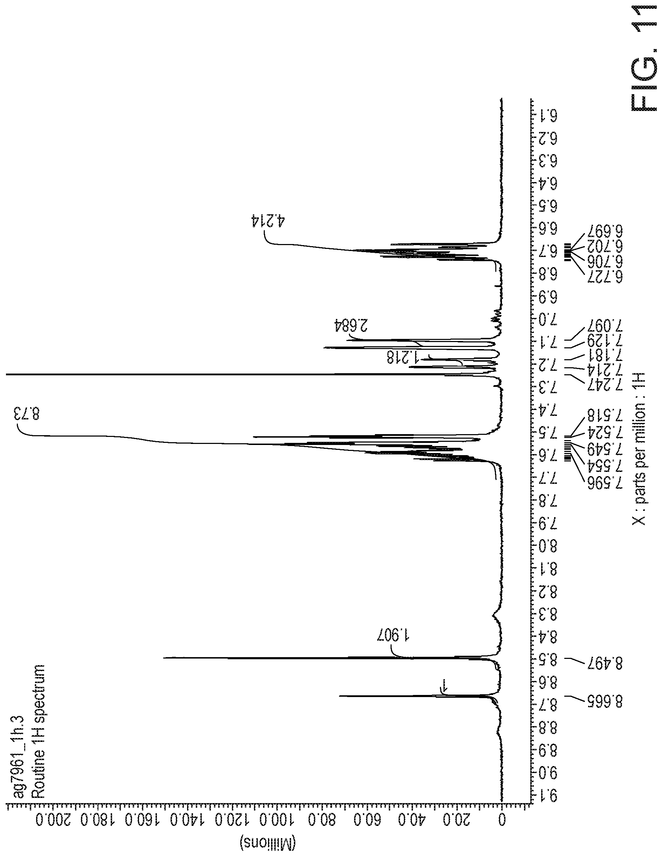

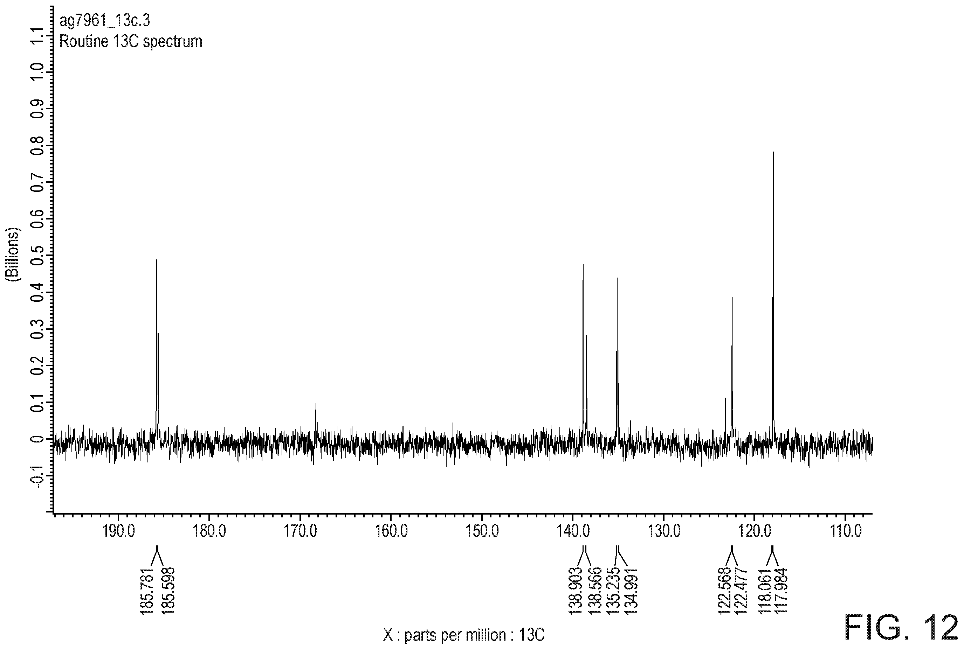

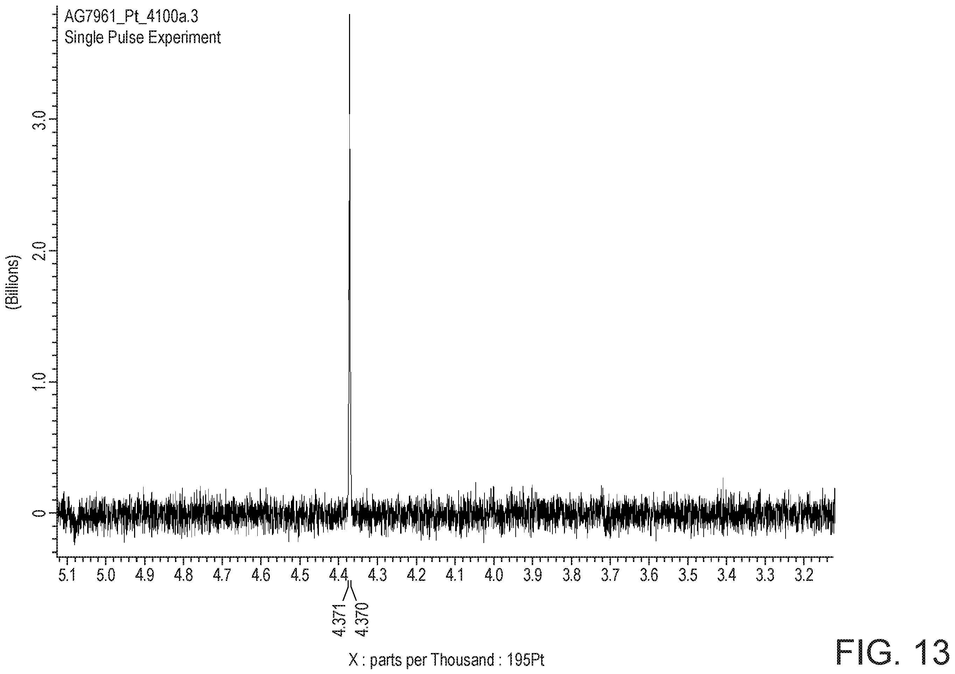

NMR spectroscopy was performed in CDCl₃ for the product of Example 2. The ¹⁹⁵Pt spectrum is shown in Figure 13. It has a single peak at 4371 ppm. This shows that there is a single Pt species present. It is in the region where a peak representing Pt(II) with four coordinated oxygen would be expected to occur, and there is no sign of the starting material (or variants).
¹H NMR (shown in Figures 10 and 11) and ¹³C (shown in Figure 12) spectra were also collected.

### UV/Vis spectroscopy

### Example 13

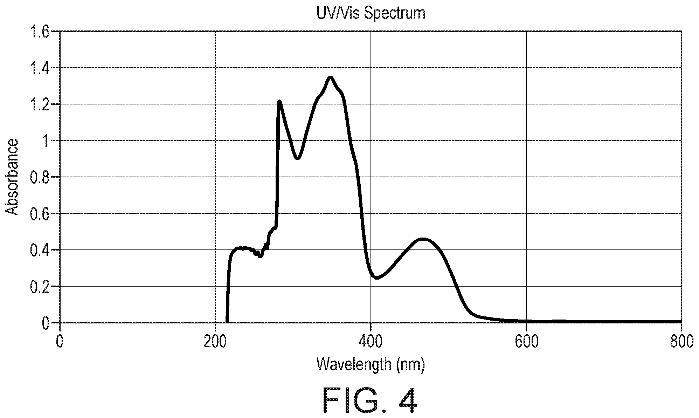

A UV/Vis spectrum was gathered for the complex made in Example 3 in toluene and is shown in Figure 4. The spectrum shows three main peaks: 468 nm, 349 nm and 283 nm. There was no absorbance above 530 nm.

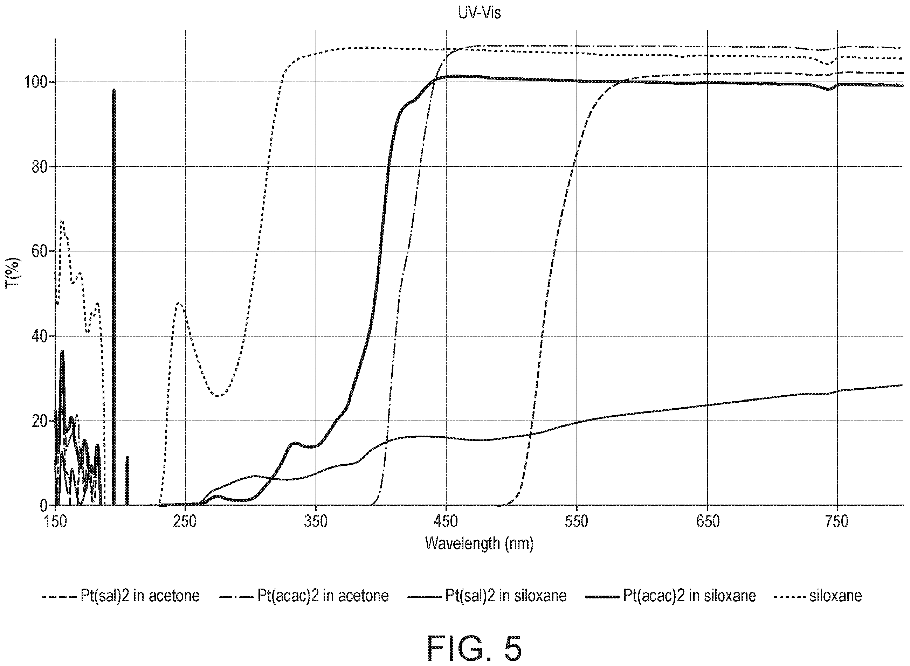

UV/Vis spectra were also gathered for the complex in various other solvents and compared with results for Pt(acac)₂. The results are shown in Figure 5.

### Fluorescence

### Example 14

Fluorescence measurements were carried out on a Cary Eclipse Spectrometer.

Five different samples were studied:
1. Vinyl-terminated polydimethylsiloxane 100 cSt
2. 1 mg/mL of the Pt complex (product of Example 1) in acetone (note: saturated solution, prone to some precipitation)
3. 1 mg/mL of the Pt complex (product of Example 1) in vinyl-terminated polydimethylsiloxane (note: poor solubility, solution very cloudy and prone to precipitation).
4. 1 mg/mL Pt(acac)₂ in acetone (note: fully soluble)
5. 1 mg/mL Pt(acac)₂ in vinyl-terminated polydimethylsiloxane (note: poor solubility, solution cloudy and prone to precipitation).

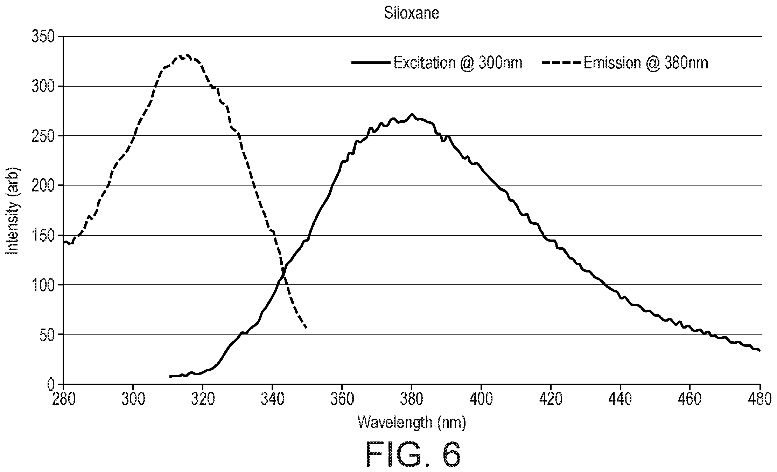

The results are shown in Figures 6-8.

Figure 6 shows that the siloxane itself does show some fluorescence. The emission wavelength was scanned with an excitation of 300 nm and showed a maximum emission intensity of 268 at 380 nm. The excitation was then scanned with the emission held at 380 nm, showing a maximum intensity of 329 at 316 nm.

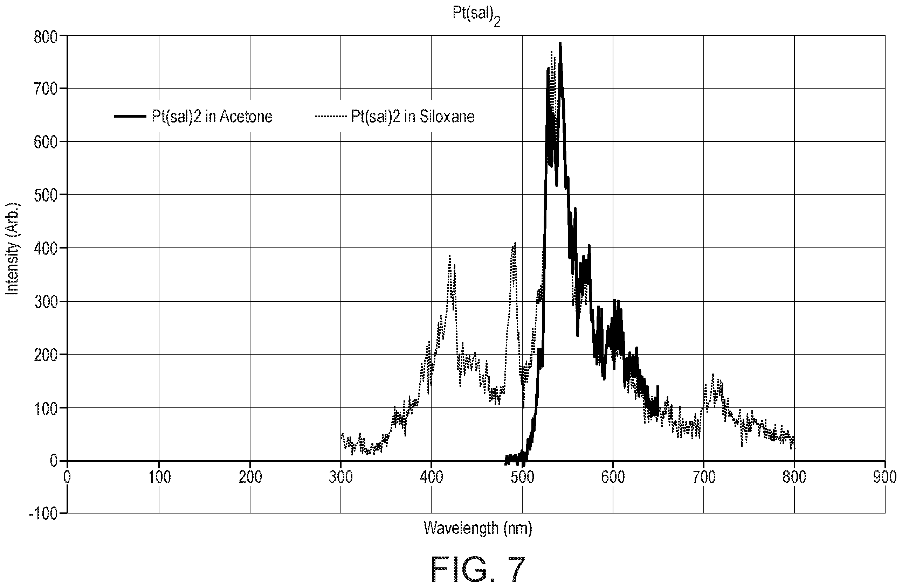

Figure 7 shows that the Pt(II) complex is fluorescent. In acetone with an excitation wavelength of 190 nm there is a sharp emission peak at 540 nm with an intensity of 784. Holding the emission at 540 nm and scanning the excitation gives a peak at 190 nm (scanning was not carried out below this wavelength).

Figure 7 also shows that the emission spectrum of the Pt(I) complex looks different in siloxane. When excited at 190 nm there is still a peak at in emission at 540 nm with intensity of 742, however there are also emission peaks at lower wavelengths: 491 nm (intensity 407) and 420 nm (intensity 385). These may be due to interaction with the siloxane. When excited at 300 nm (as in the siloxane only sample) only a weak emission is recorded (intensity approx. 50 between 330 and 380 nm); this is much less intense than the peak at 380 nm recorded in the siloxane only sample. When the emission is held at 380 nm (as in the siloxane only sample) the excitation shows a peak at 190 nm and at 295 nm (lower wavelength than that expected for the siloxane) again hinting at interaction between the complex and solvent.

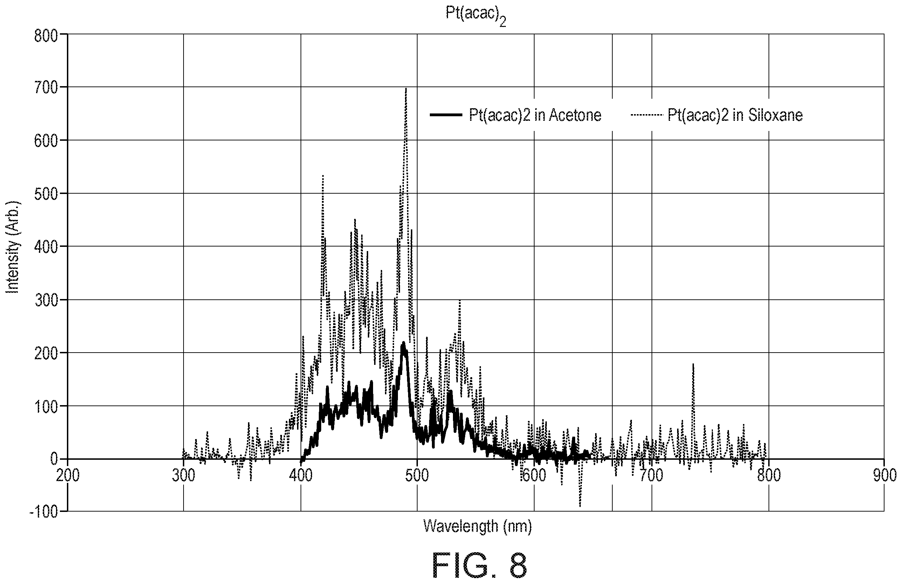

Figure 8 shows that for Pt(acac)₂ in acetone when excited at 190 nm the emission spectrum shows a peak at 489 nm with intensity 217. This is not as sharp a peak or as high intensity of that of the complex of the invention. Holding the emission at 488 nm gives an excitation peak at 190 nm as with the Pt(saI)₂ complex.

Figure 8 also shows that for Pt(acac)₂ in siloxane with an excitation of 190 nm the main peak again occurs at 490 nm with a higher intensity of 704. However, the emission spectrum also shows a peak at 419 nm with intensity 541 - this also with the Pt(sal)2 complex in this solvent. When the emission is held at 405 nm the excitation shows a peak at 328 nm, however it was not recorded below 250 nm so a peak at 190 nm was not seen. With an excitation at 328 nm, a broad emission peak is observed between 370 and 410 nm with an intensity of approx. 210.

### Solubility

### Example 15

The solubility of the product of Example 3 was tested in various solvents.

In each case, 10 mg of the complex was stirred in 1 mL of each solvent at room temperature for three hours. The solvent was then filtered. One hundred fold dilutions of the samples into methoxypropanol were then carried out and Pt content was determined by ICP-AES using a Spectro Ciros Vision ICP-OES. Yttrium was employed as an internal standard at a concentration of 5 ppm.

The results are shown below.

| ***Solvent*** | ***Pt concentration* / *mg L⁻¹*** |
|---|---|
| Water | 42.1 |
| Water:MeCN (1:1) | 167 |
| MeCN | 588 |
| Acetone:MeCN (1:1) | 698 |
| IPA | 43.4 |
| Acetone | 646 |
| MeCN:DMSO (80:20) | 1220 |
| Toluene | 346 |
| Chloroform | 3260 |
| MIBK | 369 |
| EtOH | 103 |

### Catalytic testing

### Example 16

The product of Example 3 was tested for catalytic activity.

5 mg of the product was dissolved in 1 mL dichloromethane to provide a solution ('Solution A').

The following ingredients were added to a UV-grade plastic cuvette:
- vinyl terminated polydimethyl siloxane 100 cSt DMS V21 (2g);
- (45-55% methylhydrosiloxane)dimethylsiloxane copolymer 10-15 cSt HMS-501 (0.108 mL);
- Solution A (25 µL).

The contents of the cuvette were stirred briefly with a spatula to ensure thorough mixing and a 10 mm magnetic flea was added, before sealing with parafilm.

The cuvette was placed in a UV-lamp box. The positioning of samples in the box was kept the same throughout testing (154 mm from ground to top of cuvette; 114 mm between end of housing and front of cuvette).

A 300 W ozone-free Xenon lamp was used (visible to 300 nm). A water-cooled filter removes some of the visible spectrum.

The stirrer speed was set to the 12 o'clock position and the lamp was switched on for 60 seconds only. The time taken from the switching on of the lamp to the stirrer no longer being able to complete a turn was noted as a measure of activity.

Results are provided in the Table below. 'Irradiated' indicates samples exposed to the 60 s UV radiation. 'Dark' indicates samples left in darkness without any irradiation.

| ***Sample*** | ***Time until gelling* / *s*** | ***Observations*** |
|---|---|---|
| Example 3 (irradiated) | 165 | Bubbling observed and colour faded from strong yellow to very pale |
| Example 3 (dark) | 13,500 | |

It can be seen that the composition containing the catalyst of Example 3 cured very quickly when exposed to UV light and only showed gelling after a very prolonged period when kept in the dark.

### Example 17

The product of Example 7 and Product 6A from Example 6 were tested for catalytic activity in a similar manner as Example 16, except that 11 mg of the product was dissolved in 1 mL dichloromethane in the initial step. All other aspects of the test were the same as Example 16. The results reflect gelling time after the 60 s UV irradiation.

The results were as follows:

| ***Sample*** | ***Time until gelling* / *s*** |
|---|---|
| Product 6A | 720 |
| Product of Example 7 | 208 |

### Example 18

This Example compares the catalytic activity of the Pt(II) complex of the invention made in Example 3 with that of a well-known complex, Pt(acac)₂.

The testing was done as in Example 16, except that in the initial step the following four solutions were prepared:

| ***Solution*** | ***Complex*** | ***Solvent*** | ***Amount of complex* / *mg*** | ***Amount of solvent* / *mL*** | ***Conc*** / ***mM*** |
|---|---|---|---|---|---|
| B | Pt(saI)₂ (Example 1) | DCM | 45 | 9 | 14.4 |
| C | Pt(acac)₂ | DCM | 40.2 | 9 | 14.4 |
| D | Pt(saI)₂ (Example 1) | Toluene | 15.5 | 20 | 1.77 |
| E | Pt(acac)₂ | Toluene | 14 | 20 | 1.77 |

Different amounts of the respective solutions, as shown in the Tables below, were added to the cuvette but all other aspects of the test were the same as Example 16. The results are also shown in the Tables below.

| ***Amount of solution*/*µL*** | ***Solution*** | ***Gelling time* / *s*** |
|---|---|---|
| 25 | B | 857 |
| | C | 1234 |
| 50 | B | 489 |
| | C | 719 |
| 75 | B | 299 |
| | C | 506 |
| 100 | B | 356 |
| | C | 535 |
| | | |

| ***Amount of solution* / *µL*** | ***Solution*** | ***Gelling time* / *s*** |
|---|---|---|
| 25 | D | 1263 |
| | E | 3544 |
| 50 | D | 627 |
| | E | 1350 |
| 75 | D | 415 |
| | E | 938 |
| 100 | D | 319 |
| | E | 793 |
| 200 | D | 231 |
| | E | 551 |
| 360 | D | 126 |
| | E | 486 |

The results show that the inventive complex is much more catalytically active than Pt(acac)₂. The effect is more pronounced in toluene solvent than DCM.

### Example 19

The product of Example 10 was tested for catalytic activity in a similar manner as Example 16, except that 14 mg of the product was dissolved in 1 mL dichloromethane in the initial step. All other aspects of the test were the same as Example 16. The results reflect gelling time after the 60 s UV irradiation. The time until gelling was 23 minutes and 15 seconds.

### Thermal stability

### Example 20

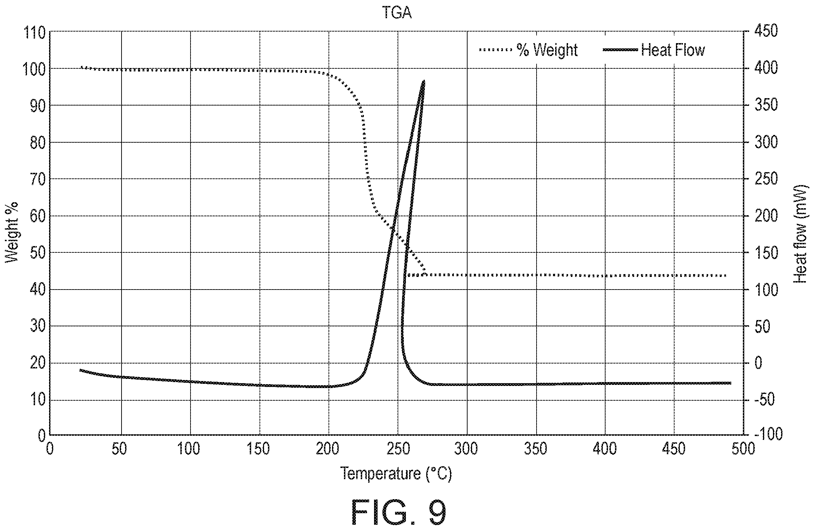

Thermogravimetric analysis of the product of Example 3 was carried out, and the results are shown in Figure 9. The results show that the product is stable up to 200 °C (which is the boiling point for salicylaldehyde). Above this temperature the ligand is lost, leaving behind the platinum metal.

## Claims

1. A method of synthesising a Pt(II) complex comprising:
(i) a first step of preparing a reaction mixture comprising a water-soluble hexachloroplatinate salt having a solubility in water at 25 °C of at least 1 g/100 ml, and a compound according to Formula I', or salt thereof, and allowing the water-soluble hexachloroplatinate salt and the compound according to Formula I' to react 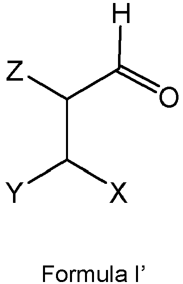 wherein
X is selected from OH, SH and NH₂, and
Y and Z, together with the two carbon atoms to which they are attached, form an unsubstituted benzene group or an unsubstituted naphthalene group , an intermediate step, after the first step but before the second step, of adding an alcoholic reducing agent and heating the reaction mixture to an elevated temperature T₂ of at least 50 °C;
(ii) a second step of adding a further quantity of the compound according to Formula I', or a salt thereof, to the reaction mixture.

2. A method according to claim 1, wherein in the first step the compound according to Formula I' is used in stoichiometric excess.

3. A method according to claim 1 or claim 2, wherein in the first step the reaction mixture further comprises a solvent selected from water, optionally mixed with an alcohol.

4. A method according to any one of claims 1 to 3, wherein the water-soluble hexachloroplatinate salt is selected from Na₂[PtCl₆] and chloroplatinic acid.

5. A method according to any one of claims 1 to 4, wherein the compound according to Formula I' and the water-soluble hexachloroplatinate salt are added to the reaction mixture in the first step in a molar ratio of at least 2:1, preferably at least 3:1, preferably at least 4:1.

6. A Pt(II) complex according to Formula Ia 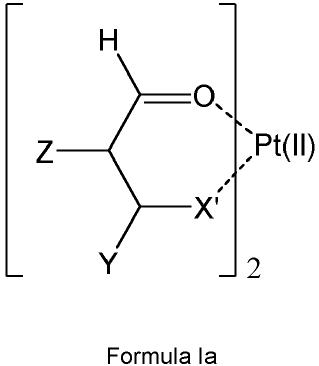 wherein
X' is selected from O, S and NH, and
Y and Z, together with the two carbon atoms to which they are attached, form an unsubstituted benzene group.

7. A complex as claimed in claim 6 wherein the complex has the following structure:

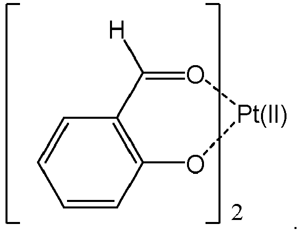

8. A method of performing a hydrosilylation reaction catalysed by a Pt(II) complex according to Formula I: 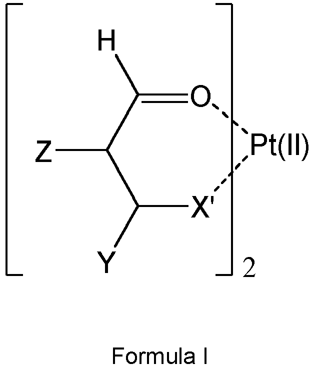 wherein
X' is selected from O, S and NH, and
Y and Z, together with the two carbon atoms to which they are attached, form an unsubstituted benzene group or an unsubstituted naphthalene group.

9. A method according to claim 8, wherein the hydrosilylation reaction is photoactivated.

10. A curable composition comprising a Pt(II) complex according to Formula I: 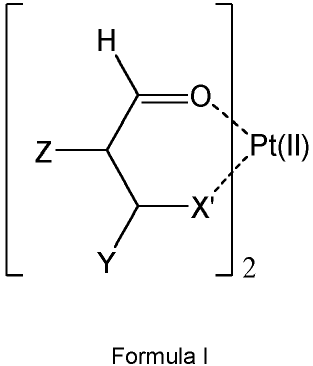 wherein
X' is selected from O, S and NH, and
Y and Z, together with the two carbon atoms to which they are attached, form an unsubstituted benzene group or an unsubstituted naphthalene group.

11. A curable composition according to claim 10, which is a curable silicone composition, preferably an adhesive or a release liner.

12. A cured silicone product formed by curing a curable composition according to claim 10 or claim 11.

13. A cured silicone product according to claim 12, which is an elastomer, a lens, a coating or on an electronic component, a cured adhesive or a dental impression.

## Patentansprüche

1. Verfahren zur Synthese eines Pt(II)-Komplexes, umfassend:
(i) einen ersten Schritt eines Herstellens eines Reaktionsgemischs, umfassend ein wasserlösliches Hexachloroplatinat-Salz mit einer Löslichkeit in Wasser bei 25 °C von mindestens 1 g/100 mL und eine Verbindung gemäß Formel I' oder ein Salz davon, und eines Reagierenlassens des wasserlöslichen Hexachloroplatinat-Salzes und der Verbindung gemäß Formel I': 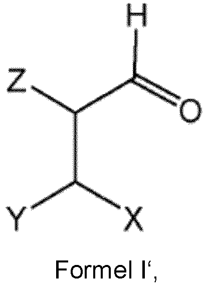 wobei
X aus OH, SH und NH₂ ausgewählt ist und
Y und Z, zusammen mit den zwei Kohlenstoffatomen, an die sie angelagert sind, eine unsubstituierte Benzolgruppe oder eine unsubstituierte Naphthalingruppe bilden,
einen Zwischenschritt, nach dem ersten Schritt, jedoch vor dem zweiten Schritt, eines Zugebens eines alkoholischen Reduktionsmittels und eines Erhitzens des Reaktionsgemischs auf eine erhöhte Temperatur T₂ von mindestens 50 °C;
(ii) einen zweiten Schritt eines Zugebens einer weiteren Menge der Verbindung gemäß Formel I' oder eines Salzes davon zu dem Reaktionsgemisch.

2. Verfahren nach Anspruch 1, wobei die Verbindung gemäß Formel I' in dem ersten Schritt in einem stöchiometrischen Überschuss verwendet wird.

3. Verfahren nach Anspruch 1 oder 2, wobei das Reaktionsgemisch in dem ersten Schritt weiterhin ein Lösungsmittel umfasst, das aus Wasser, optional mit einem Alkohol gemischt, ausgewählt ist.

4. Verfahren nach einem der Ansprüche 1 bis 3, wobei das wasserlösliche Hexachloroplatinat-Salz aus Na₂[PtCl₆] und Chloroplatinsäure ausgewählt ist.

5. Verfahren nach einem der Ansprüche 1 bis 4, wobei die Verbindung gemäß Formel I' und das wasserlösliche Hexachloroplatinat-Salz zu dem Reaktionsgemisch in dem ersten Schritt in einem Molverhältnis von mindestens 2:1, vorzugsweise mindestens 3:1, vorzugsweise mindestens 4:1 zugegeben werden.

6. Pt(II)-Komplex gemäß Formel la: 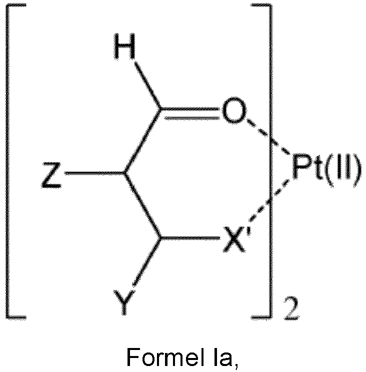 wobei
X' aus O, S und NH ausgewählt ist und
Y und Z, zusammen mit den zwei Kohlenstoffatomen, an die sie angelagert sind, eine unsubstituierte Benzolgruppe bilden.

7. Komplex nach Anspruch 6, wobei der Komplex die folgende Struktur aufweist:

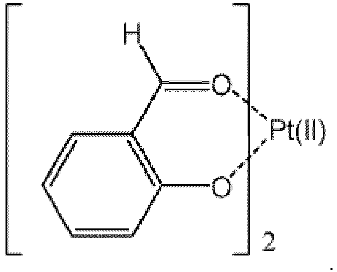

8. Verfahren zur Durchführung einer Hydrosilylierungsreaktion, die durch einen Pt(II)-Komplex gemäß Formel I katalysiert wird: 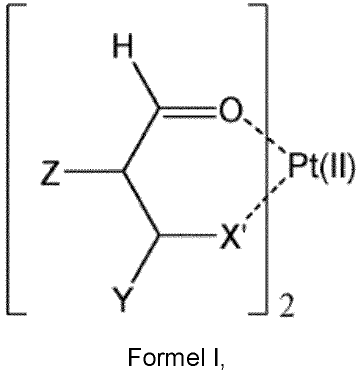 wobei
X' aus OH, SH und NH ausgewählt ist und
Y und Z, zusammen mit den zwei Kohlenstoffatomen, an die sie angelagert sind, eine unsubstituierte Benzolgruppe oder eine unsubstituierte Naphthalingruppe bilden.

9. Verfahren nach Anspruch 8, wobei die Hydrosilylierungsreaktion fotoaktiviert wird.

10. Härtbare Zusammensetzung, umfassend einen Pt(II)-Komplex gemäß Formel I: 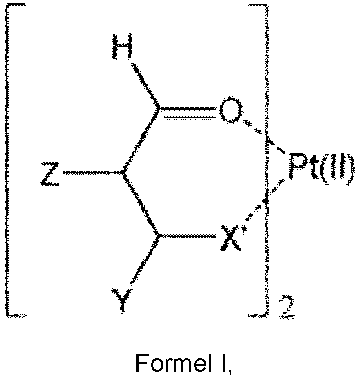 wobei
X' aus OH, SH und NH ausgewählt ist und
Y und Z, zusammen mit den zwei Kohlenstoffatomen, an die sie angelagert sind, eine unsubstituierte Benzolgruppe oder eine unsubstituierte Naphthalingruppe bilden.

11. Härtbare Zusammensetzung nach Anspruch 10, die eine härtbare Silikonzusammensetzung, vorzugsweise ein Klebstoff oder eine Trennschicht ist.

12. Gehärtetes Silikonprodukt, das durch Härten einer härtbaren Zusammensetzung nach Anspruch 10 oder 11 gebildet wird.

13. Gehärtetes Silikonprodukt nach Anspruch 12, das ein Elastomer, eine Linse, eine Beschichtung oder auf einer elektronischen Komponente, ein gehärteter Klebstoff oder ein Zahnabdruck ist.

## Revendications

1. Procédé de synthèse d'un complexe de Pt(II) comprenant :
(i) une première étape de préparation d'un mélange réactionnel comprenant un sel d'hexachloroplatinate soluble dans l'eau, présentant une solubilité dans l'eau à 25°C d'au moins 1 g/100 ml, et un composé selon la formule I', ou un sel correspondant, et de réaction du sel d'hexachloroplatinate soluble dans l'eau et du composé selon la formule I' 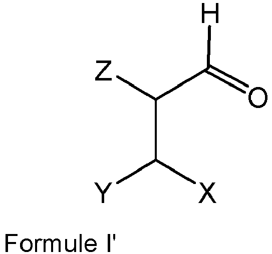 dans laquelle
X est choisi parmi OH, SH et NH₂ et
Y et Z,conjointement avec les deux atomes de carbone auxquels ils sont attachés, forment un groupe benzène non substitué ou un groupe naphtalène non substitué,
une étape intermédiaire, après la première étape mais avant la deuxième étape, d'addition d'un agent de réduction alcoolique et de chauffage du mélange réactionnel à une température élevée T₂ d'au moins 50°C ;
(ii) une deuxième étape d'addition d'une autre quantité du composé selon la formule I', ou d'un sel correspondant, au mélange réactionnel.

2. Procédé selon la revendication 1, où, dans la première étape, le composé selon la formule l'est utilisé en excès stœchiométrique.

3. Procédé selon la revendication 1 ou la revendication 2, où, dans la première étape, le mélange réactionnel comprend en outre un solvant choisi parmi l'eau, éventuellement mélangée à un alcool.

4. Procédé selon l'une quelconque des revendications 1 à 3, le sel d'hexachloroplatinate soluble dans l'eau étant choisi parmi Na₂[PtCl₆] et l'acide chloroplatinique.

5. Procédé selon l'une quelconque des revendications 1 à 4, le composé selon la formule I' et le sel d'hexachloroplatinate soluble dans l'eau étant ajoutés au mélange réactionnel dans la première étape dans un rapport molaire d'au moins 2:1, de préférence d'au moins 3:1, de préférence d'au moins 4:1.

6. Complexe de Pt(II) selon la formule la 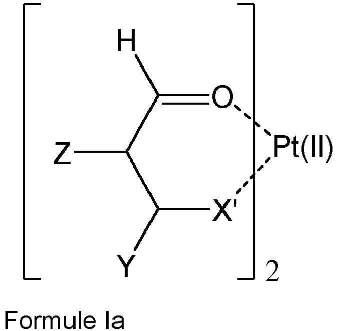 dans laquelle
X' est choisi parmi O, S et NH et
Y et Z,conjointement avec les deux atomes de carbone auxquels ils sont attachés, forment un groupe benzène non substitué.

7. Complexe selon la revendication 6, le complexe présentant la structure suivante :

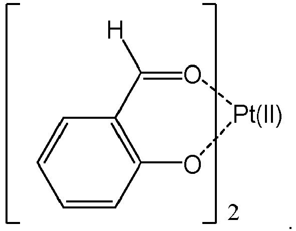

8. Procédé de réalisation d'une réaction d'hydrosilylation catalysée par un complexe de Pt(II) selon la formule I : 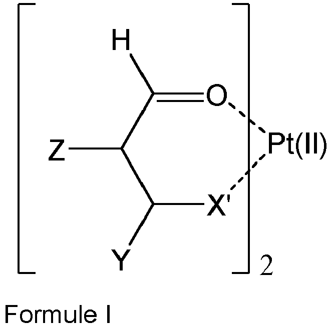 dans laquelle
X' est choisi parmi O, S et NH et
Y et Z,conjointement avec les deux atomes de carbone auxquels ils sont attachés, forment un groupe benzène non substitué ou un groupe naphtalène non substitué.

9. Procédé selon la revendication 8, la réaction d'hydrosilylation étant photoactivée.

10. Composition durcissable comprenant un complexe de Pt(II) selon la formule I : 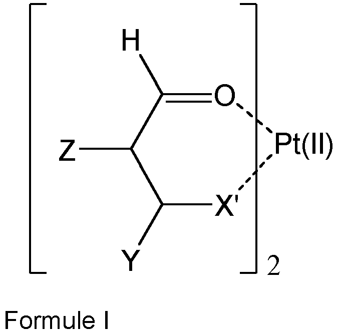 dans laquelle
X' est choisi parmi O, S et NH et
Y et Z,conjointement avec les deux atomes de carbone auxquels ils sont attachés, forment un groupe benzène non substitué ou un groupe naphtalène non substitué.

11. Composition durcissable selon la revendication 10, qui est une composition durcissable à base de silicone, de préférence un adhésif ou un revêtement antiadhésif.

12. Produit durci à base de silicone formé par durcissement d'une composition durcissable selon la revendication 10 ou la revendication 11.

13. Produit durci à base de silicone selon la revendication 12, qui est un élastomère, une lentille, un revêtement ou sur un composant électronique, un adhésif durci ou une impression dentaire.
